# EUROPEAN PATENT SPECIFICATION

(11) **EP 3 459 703 B1**
(45) Date of publication and mention of the grant of the patent: **04.08.2021**
(21) Application number: 18196947.8
(22) Date of filing: 26.09.2018
(51) Int. Cl.: B29C 33/76, B29C 33/04, B29C 45/73

(54) **INJECTION MOLDING ASSEMBLY WITH COOLING INSERT**
SPRITZGIESSANORDNUNG MIT KÜHLEINSATZ
ENSEMBLE DE MOULAGE PAR INJECTION AVEC INSERT DE REFROIDISSEMENT

(30) Priority: 26.09.2017 US 201715716043
(43) Date of publication of application: 27.03.2019
(73) Proprietor: Fontaine, Brandon, Leominster, MA 01453 (US)
(72) Inventor: Fontaine, Brandon, Leominster, MA 01453 (US)
(74) Representative: Slingsby Partners LLP

(56) References cited:
- EP-A1- 1 800 822
- EP-A1- 2 923 811
- DE-U1- 29 800 426
- US-A1- 2005 263 673
- US-A1- 2008 258 353
- US-A1- 2013 224 327

## Description

### FIELD OF THE DISCLOSURE

This disclosure relates to injection molding systems, and more particularly to assemblies used in injection molding processes.

### BACKGROUND

Many common household and commercial products, such as caps or tops for disposable containers, are manufactured using plastic while using injection molding techniques. Such techniques often employ a mold assembly that includes two pieces (e.g., a mold core and mold cavity) that when joined to one another form a cavity in which to create an article, such as a plastic part. The interface between the two molding surfaces is known as the parting line (P/L). The article is created by injecting a plastic heated to a high temperature into the cavity via a gate disposed within one of the mold assembly pieces. As a result of the injection, the plastic flows into and fills the cavity. The injection process can initially form the article in a matter of seconds by filling the cavity. Some injection processes are iterative and require more than one plastic injection to fully fill the cavity and thereby create a complete article. Once the article has cooled, the assembly is taken apart and the newly manufactured article is removed. The mold assembly can then be reassembled to manufacture another article. US 2005/0263673 describes a cooling injection mold that comprises a plurality of fluid flow conduits defined by interlocking ribs. US 2013/0224327 describes an injection mold assembly having a simplified cooling assembly comprising cooling lines. US 2008/0258353 describes a mold system which comprises a cube configured to rotate about an axis. EP 1800822 describes an injection molding device comprising a plurality of interleaved plane spiral cooling ducts. DE 29800426 describes a cooling and heating core for a tool part suited for injection molding. EP 2923811 describes an injection mold comprising tempering medium channels that define flow paths for circulating a heating or cooling medium.

### SUMMARY

One example embodiment of the present disclosure provides a mold assembly as described in claim 1.
In some other cases, the mold assembly further includes at least one ejector pin that is positioned within the insert and configured to extend through the mold core block and into the part cavity, wherein an O-ring is installed about one end of the ejector pin to prevent fluid from flowing into the part cavity. In some cases, the at least one fluid channel includes at least one control surface to adjust a rate of cooling for the article within the part cavity. In some such cases, the control surface is contoured to cause a turbulent flow of the fluid flowing through the at least one fluid channel. In other such cases, the control surface is a bottom surface of the at least one fluid channel. In yet other such cases, the control surface comprises at least one of a plurality of dimples, depressions, bumps, steps, and grooves. In some cases, the at least one fluid channel is constructed and arranged in an outline of the article formed within the part cavity. In other cases, the first molding surface and the second molding surface comprise a first material and the at least one fluid channel comprises a second material that is different from the first material. In some other cases, the mold cavity block further includes a gate configured to receive a material flow and convey the material flow into the part cavity. In some cases, the mold assembly further includes at least one of an O-ring or a gasket positioned between the insert and the mold core block to prevent fluid from flowing out of the mold assembly. In other cases, the mold assembly further includes a frame configured to receive the mold assembly and to maintain a position of the mold cavity block in relation to the mold core block as a material is injected into the part cavity to manufacture the article therein.

Another example embodiment of the present disclosure provides a method of manufacturing a mold assembly according to claim 12. In some instances, the method further includes machining at least one control surface into the external fluid channel include to adjust a rate of cooling for the article produced by the mold assembly. In some such instances, the control surface is machined by milling at least one of a plurality of dimples, depressions, bumps, steps, and grooves within the external fluid channel. In other instances, the external fluid channel is in a form of an outline of an article produced by the mold assembly.

Another example embodiment of the present disclosure provides a kit for a molding assembly according to claim 16. In other cases, the kit further includes comprising a second insert configured to be received within the mold cavity block, the second insert including at least one fluid channel within one or more external surfaces of the second insert, wherein fluid is to contact a surface of the mold cavity block that is opposite the first molding surface to transfer thermal energy to the fluid from an article located within the part cavity via the first molding surface and the surface opposite the first molding surface. In some other cases, the at least one fluid channel is reconfigurable by replacing the second insert with another insert.

Still other aspects and advantages are discussed in detail below.

Furthermore, the advantages described herein are not all-inclusive and, in particular, many additional advantages will be apparent to one of ordinary skill in the art in view of the drawings, specification, and claims.

### BRIEF DESCRIPTION OF THE DRAWINGS

Figure 1 is a cross-sectional view of a mold assembly configured in accordance with an embodiment of the present disclosure.
Figure 2A is a cross-sectional view of a mold core block of the mold assembly of Figure 1, in accordance with an embodiment of the present disclosure.
Figure 2B is a top view of the mold core block shown in Figure 2A, in accordance with an embodiment of the present disclosure.
Figure 2C is a bottom view of the mold core block shown in Figure 2A, in accordance with an embodiment of the present disclosure.
Figure 3A is a cross-sectional view of a cooling insert of the mold assembly of Figure 1, in accordance with an embodiment of the present disclosure.
Figure 3B is a top view of the cooling insert shown in Figure 3A, in accordance with an embodiment of the present disclosure.
Figure 4 is a cross-sectional view of a mold cavity block of the mold assembly of Figure 1, in accordance with an embodiment of the present disclosure.
Figure 5 is a cross-sectional view of a mold assembly, in accordance with another embodiment of the present disclosure.
Figure 6 is a cross-sectional view of the mold cavity block of the mold assembly of Figure 5, in accordance with an embodiment of the present disclosure.
Figure 7A is a perspective view of the cooling insert of the mold cavity block shown in Figure 5, in accordance with an embodiment of the present disclosure.
Figure 7B is a top view of the cooling insert shown in Figure 7A, in accordance with an embodiment of the present disclosure.
Figure 7C is a cross-sectional view of the cooling insert of the mold cavity block shown in Figure 7A, in accordance with an embodiment of the present disclosure
Figure 8 is a cross-sectional view of a mold core block, in accordance with another embodiment of the present disclosure.
Figure 9 is a flowchart of a method for manufacturing a mold assembly, in accordance with an embodiment of the present disclosure.
Figure 10 is a flowchart of a method for using a mold assembly to manufacture an article, in accordance with an embodiment of the present disclosure.
Figure 11 is a side view of a mold assembly to manufacture of a bottle top, in accordance with another embodiment of the present disclosure.
Figure 12 is a perspective view of a mold core block for the mold assembly of Figure 11, in accordance with an embodiment of the present disclosure.
Figure 13 is a cross-sectional view of a cooling insert for the core of Figures 11 and 12, in accordance with an embodiment of the present disclosure.
Figure 14 is a cross-sectional view of a mold assembly to manufacture of a cup, in accordance with another embodiment of the present disclosure.
Figure 15 is a perspective view of a mold core block and a cooling insert for the mold assembly of Figure 14, in accordance with an embodiment of the present disclosure.
Figure 16 is a perspective view of a cooling insert for a mold core block, in accordance with another embodiment of the present disclosure.
Figure 17 is a cross-sectional view of the cooling insert of Figure 16, in accordance with an embodiment of the present disclosure.

These and other features of the present embodiments will be understood better by reading the following detailed description, taken together with the figures herein described. The accompanying drawings are not intended to be drawn to scale. For purposes of clarity, not every component may be labeled in every drawing.

### DETAILED DESCRIPTION

Techniques and assemblies are disclosed for a molding assembly to manufacture an article (e.g., a plastic cup or bottle cap or a complex shaped component). The assembly includes a mold cavity block including a first molding surface. In some examples, a molding surface is a surface that defines a surface of the article to be made using the mold assembly. Received in the mold cavity block is a mold core block that includes a second molding surface and an internal cavity. Together, the second molding surface and the first molding surface define a part cavity in which to manufacture the article. Received within the internal cavity and in contact with an inner surface therein is an insert, for example a cooling insert. The inner surface is opposite the second molding surface so that inner surface is in contact with the insert when it is installed in the core. With the insert in contact with the inner surface deflection of the second mold surface is minimized (or otherwise eliminated). In addition, the insert includes fluid channels recessed within external surfaces of the insert. With the insert installed in the internal cavity of the core, a portion of the fluid channels are positioned adjacent the second molding surface to receive thermal energy from the article (e.g., portions of the molding surface in contact with the article). The fluid channels and the inner surface of the internal cavity define a conduit in which fluid can flow. As it moves through the mold assembly, the fluid is in contact with the inner surface of the core to receive thermal energy from the inner surface that is transferred from the article located within the part cavity. Thus, the article cools more quickly due to the presence and movement of the fluid, so that the article can be removed from the assembly in less time to allow for a subsequent article to be made.

### General Overview

The production of commercial and household goods, for example beverage and cleaning products, often times involves the manufacture of plastic packaging (e.g., disposable bottles). Manufacturing techniques, such as plastic injection molding, have allowed manufacturers to efficiently produce articles (e.g., bottle tops and caps or medical and consumer products) for such packaging at high production rates to satisfy consumer demand. To maintain or otherwise improve upon this production rate, mold assemblies can include cooling lines (e.g., water lines) that reduce the time to cool an article. As a result, more articles can be manufactured in less time because the delay caused by cooling time is reduced.

Current production rates using existing mold assembly technology are limited because conventional mold assembly designs do not adequately cool the article, for example by providing insufficient cooling or cooling in an uncontrolled fashion. For example, plastic injection mold assemblies made using conventional manufacturing techniques (e.g., drilling) include cooling lines located at distances from the molding surfaces that reduce their effectiveness to cool the article. The cooling lines are constructed and arranged in such a fashion because positioning the lines closer to the mold surfaces may weaken or otherwise adversely affect structural integrity of the molding surface. More specifically, drilling fluid passages near the molding surface removes material that supports the surface. As a result, the strength of the molding surface is reduced because there is less material present to support the molding surface and resist the forces applied by the injected plastic. Thus, there is a greater likelihood that the molding surface may collapse when the highly-pressurized plastic is injected into the part cavity. In some instances, the material that supports the molding surface is inadvertently removed. For example, drilling techniques are known to be inaccurate because drill bits tend to wobble or walk while in use. This undesirable movement of the drill bit can cause the machined hole to be improperly located or sized (or both). As a result, the strength of mold assembly component may be reduced because the fluid passage is not properly located. The component, in some instances, may be repaired (e.g., by plug welding and re-drilling or installing a sleeve), but such repairs increase costs to manufacture mold assemblies. In some instances, however, the component cannot be repaired, and thus must be scrapped and remade. Moreover, many of the fluid passageways are holes (e.g., blind holes) that are drilled to a specified depth without passing through the entire component. Drilling blind holes can increase the likelihood of improperly machining the fluid passageway because the depth of the hole cannot be easily seen or measured (or both).

In addition, there are physical limitations associated with drilling techniques that restrict fluid channel patterns for conventional mold assemblies. For instance, machines, such as vertical mills or lathes, used to machine fluid channel patterns have limited capabilities because the mold assembly component and the cutting tool (e.g., the drill bit) can only be positioned in a limited number of ways relative to one another. As a result, typical mold assembly designs do not include fluid passageways that surround or otherwise follow the perimeter of the part because those designs would be too expensive or not practical to manufacture using traditional machining processes. Thus, the mold assembly designs include fluid passages that are easier to machine, but cool the article less effectively.

Past efforts to remedy these problems have been unsuccessful. For instance, to avoid the risks associated with machining mold assemblies, article manufacturers cool their mold assemblies using more cooling fluid (i.e., increasing the cooling fluid flow rate). Increasing the flow rate of the cooling fluid, however, has disadvantages, because the article experiences uneven cooling as fluid travels from one end of the mold to the other. As a result, the article may not form properly, and thus need to be scrapped. Furthermore, increasing the cooling fluid flow rate necessitates the use of larger pumps, which increases operating costs to manufacture the articles. In addition, increasing the flow of cooling fluid to the mold assembly also causes cavitation that increases wear of the waterlines and weakens internal molding surfaces.

Thus, and in accordance with an embodiment of the present disclosure, techniques and assemblies are disclosed for an improved molding assembly that cools articles more effectively than conventional techniques and assemblies. The improved assembly includes a mold cavity block including a first molding surface. This first molding surface defines a pattern for the article. More particularly, the pattern defines internal and/or external surfaces for at least a portion of the article to be manufactured. Thus, in some examples, at least two molding surfaces are present within the mold assembly to manufacture an article. Adjacent to the first molding surface within the mold cavity block can be a gate in which a material (e.g., high-temperature molten plastic or rubber) from a runner flows through and into the part cavity. The mold cavity block is further configured to receive a mold core block that includes a second molding surface.

Received in the mold cavity block is a mold core block (also referred to herein as a core) that includes a second molding surface and an internal cavity. Together, the second molding surface and the first molding surface define a part cavity in which to manufacture the article. The internal cavity of the core is configured to receive an insert, as described further below. The core can further include a fluid inlet connection configured to receive a conduit (e.g., a hose or pipe) that is attached to a source of cooling fluid (e.g., a water pump). Cooling fluid is a liquid, such as water, that is provided to the mold assembly to reduce the cooling time of the article. Reducing cooling time of an article enables manufacturers to increase their production rate because the article can be removed from the mold assembly sooner to allow for the next article to be made. In communication with the fluid inlet connection is a fluid supply channel. The fluid supply channel guides or otherwise directs the flow of cooling fluid to the insert positioned within internal cavity of the core.

Within the internal cavity and in contact with an inner surface therein is an insert, for example a cooling insert. The inner surface (e.g., a sub-surface of the insert) can be opposite the second molding surface so that the inner surface is in contact with the insert when it is installed. Note that the inner surface can be a direct control cooling surface that is partially or completely parallel to the second molding surface. The second molding surface experiences pressure from applied forces caused by the material (e.g., high-temperature molten plastic or rubber) injected into the part cavity. These forces are transferred to the insert body along at least a portion of the direct control cooling surface and distributed to a mold frame attached to the mold assembly. Furthermore, the core and insert can be manufactured from the same or different materials (e.g., steel and aluminum) from a single piece of material or combination of several pieces (e.g., as a weldment), depending on the given application. The insert, in some embodiments, can further include at least one ejector pin to dislodge or otherwise displace the article from the second molding surface. The ejector pin can be positioned within the insert so that it retractably extends through the core and into the part cavity. To remove the article from the molding surface, the ejector pin is inserted within the mold assembly so that the ejector pin passes through the insert and core and extends into the part cavity. Once inserted into part cavity, the ejector pin can be further inserted so that the pin contacts the article causing it to move off or from the molding surface. During article manufacture, the ejector pin is retracted from the core so that the pin is no longer within the part cavity. To prevent the cooling fluid from flowing out of the mold assembly along the ejector pin in either the inserted or retracted positions, an O-ring can be installed about one end of the pin.

In some examples, the insert is further configured to receive cooling fluid from a source via the core. To prevent the flow of cooling fluid out of the mold assembly, the cooling insert includes at least one gasket located between it and the core to seal a joint therebetween. The cooling fluid from the core is received by one or more fluid channels within the insert. The fluid channels can be located internally within or externally on the insert (or both). The internal fluid channels can be bores that pass completely through the insert or otherwise intersect with another fluid channel. Thus, the insert can be manufactured without machining blind holes that can cause machining errors. Such internal channels are configured to receive cooling fluid from the core and distribute it throughout the insert. The insert can also include fluid channels that are recessed within external surfaces of the insert. The external fluid channels along with the inner surfaces of the internal cavity define a conduit in which fluid can flow. As the fluid moves through the mold assembly, the fluid is in contact with the inner surface of the core (e.g., direct control cooling surface (DCCS)) to receive thermal energy from inner surface that is transferred from the article located within the part cavity. These fluid channels can more effectively and efficiently allow the cooling fluid to absorb thermal energy from the article, because they can be machined (e.g., by milling) closer to mold surfaces without adversely affecting the structural properties of those surfaces. The fluid channels, in some embodiments, can include a control surface. A control surface is a surface (or a portion of a surface) of a channel that includes one or more features, such as dimples, bumps, grooves or steps, that alter or otherwise change the flow of cooling fluid within the channel (e.g., from laminar to turbulent flow). As a result, the cooling fluid can absorb more thermal energy from the article per unit time, and thereby reducing the cooling time of the article (i.e., increasing a rate of cooling for the article). In addition, the external fluid channels can be located along a perimeter of the article so that they are positioned more uniformly about the article or at critical locations near the article (e.g., areas in which more cooling fluid is needed, such as hot spots) or both. Thus, the article can be cooled more quickly and evenly so that it can be removed from the assembly in less time to allow for the next article to be made. Uneven cooling of the article causes distortion of the article prior to and after ejection, because gases present within the plastic article are released as the article cools.

The mold assembly can also be reconfigurable to improve or adjust heat transfer characteristics of the assembly, and thereby increasing a rate of cooling for the article. For example, the time in which to cool the article can be reduced by modifying one or more of the fluid channels. Unlike water passageways made by drilling that are not easily modified, the external fluid channels on the insert can be readily machined (e.g., increasing a depth or width of the channel) or otherwise modified because they are accessible and visible due to their position on an external surface of the insert. Thus, changes to the external fluid channels can be done without extensive modification to the mold assembly to improve their cooling effectiveness. In some cases, the same insert is removed, modified and re-installed. In other cases, however, another insert having a different fluid channel pattern than the removed insert can be installed. It is noteworthy that water channels are not to be cut into the internal surface of the mold core block or mold cavity block because water channels in such surfaces limit the types and number of water patterns for a mold assembly. In such instances, the mold assembly may include two or more interchangeable inserts. When in use, the mold assembly can continue to manufacture articles with a first insert, while improvements or repairs are made to a second insert that is not currently in use. Subsequently, the inserts can be swapped or otherwise exchanged with one another so that the first insert can be repaired or modified (e.g., to accomplish a cooling system adjustment). As a result, article manufacturers can experience less down time caused by mold assembly maintenance or adjustments, and thus increase their production rates and quality control.

In some embodiments, the insert can be installed within the mold cavity block instead of the mold core block, depending on the given application. While in yet other embodiments, a second insert is positioned within the first insert of the core block and the mold cavity block. The second insert can be configured with fluid channels, as described above for the first insert, so that cooling fluid can be supplied to a second molding surface of the mold assembly to further cool the article and reduce cooling time. Numerous other mold assembly configurations will be apparent in light of the present disclosure.

### Example Mold Assembly Application

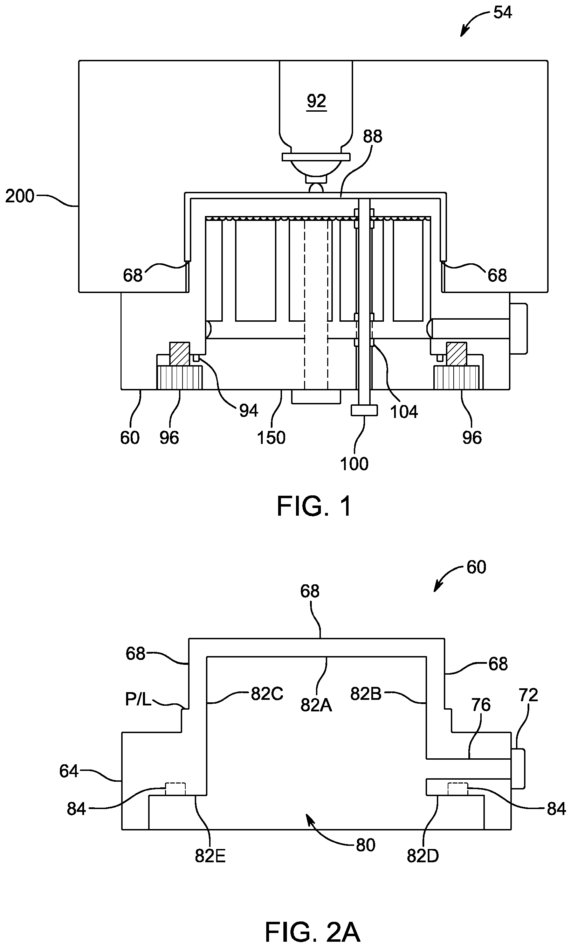

Figure 1 is a cross-sectional view of a mold assembly 54 configured in accordance with an embodiment of the present disclosure. Generally speaking, the mold assembly 54 can be received within a mold fixture used to manufacture an article (e.g., cups or bottle tops or caps). The article is made with a material such as, plastic, rubber or any other injectable material. The material is heated to a melting temperature and injected into the mold fixture at a high pressure. For instance, plastic materials, such as polystyrene, poly-vinyl chloride, nylon, and acrylonitrile butadiene styrene (ABS), can have melting temperatures ranging from 300 to 800° Farenheit (F). The mold fixture can include a mold frame having a mold assembly 54 disposed therein. The mold frame houses or otherwise supports the mold assembly 54. In more detail, the mold frame can maintain the two pieces of the mold assembly 54 together in a fixed position in relation to one another as the material is injected therebetween. In short, the mold frame acts to maintain the mold assembly 54 together as the forces from the pressurized injected material act to separate the assembly 54. The mold frame can include one or more backing plates that are configured to receive the pieces of the mold assembly 54. In addition, the mold frame, in some embodiments, can include a series of carbon steel, stainless steel or aluminum plates (or combinations thereof) which contain mold components, including cavities, cores, a runner system, a cooling system, and an ejection system, each of which is described further below. In some embodiments, the mold frame may include one or more connections to receive and transfer liquids (e.g., molten or liquid material or cooling fluid) into the mold assembly 54. In some other embodiments, the mold frame allows the mold assembly 54 to be positioned or otherwise attached to a machine configured to automatically assemble and disassemble the mold assembly 54 for high-volume article manufacture.

The mold assembly 54 is configured to manufacture an article (e.g., a plastic or rubber part) in a pattern defined by the mold surfaces 68 within cavity 88. The pattern is defined by the shape of the molding surfaces 68 that define a part cavity within the mold assembly, as will be described further herein. In operation, a material (e.g., plastic or rubber) is heated to a high temperature so that it is in a liquid state and injected into the mold assembly 54 at high pressure. The material is then injected into the part cavity at high pressure (e.g., 5000 pounds per square inch (psi) to 15000 psi) using, for example, a ram. With the part cavity full, the material cools or otherwise solidifies into a newly manufacture article. In an example embodiment, the mold assembly 54 includes a mold core block 60, a cooling insert 150, and a mold cavity block 200. Together the mold core block 60 and mold cavity block 200 transfer the forces from the pressurized material to cooling insert 150. In response, the cooling insert 150 transfers these forces to the mold frame that contains the mold assembly 54. As can be seen with reference to Figure 1, together the mold core block 60 and the mold cavity block 200 define a part cavity 88 in which to manufacture an article (e.g., a plastic part), as previously described. In more detail, the mold cavity block 200 includes a gate 92 that directs the flow of molten material into the part cavity 88. The gate 92, in some embodiments, can be a sprue gate. The molten material may flow through a hot runner system. In a general sense, the hot runner system is a portion of the mold cavity block 200 that transfers the molten material from a material source (e.g., a hopper) to the gate 92. In one example, a runner can be a feed channel (e.g., a passageway) that is machined within the mold cavity block that connects a feed opening of the gate 92. Once received in the part cavity 88, the material is formed into a shape defined by molding surfaces located on both the mold core block 60 and mold cavity block 200, as will be described further herein. The article is then removed from part cavity 88 once it has cooled.

To reduce the time required to cool the article, mold core block 60 can include a cooling insert 150. The cooling insert 150 can be installed within the mold core block 60 or the mold cavity block 200 or both, depending on the application. In this example embodiment, the cooling insert 150 is positioned within the mold core block 60 and describe in relation thereto. The cooling insert 150 is configured to supply cooling fluid to absorb thermal energy from the material. A cooling fluid can be any liquid capable of absorbing thermal energy, such as water, deionized water, and a mixture of oil and water. In some embodiments, a non-corrosive additive, such as a corrosion inhibitor, can be supplied with the cooling fluid to prevent corrosion of the fluid channels within the cooling insert 150 or core 60 (or both). As can be seen, the cooling insert 150 is installed within the core 60 with a gasket 94 to seal a joint between the core 60 and cooling insert 150. The gasket 94 can be manufactured from materials, such as nitrile rubber, plastic polymers, and polytetrafluoroethylene (Teflon).

The cooling insert 150 can be attached to the core 60 using fasteners 96, such as screws or bolts or studs and nuts, to maintain the insert 150 in a fixed position relative to core 60. Thus, the cooling insert 150 can be easily removed from the core 60 without modification thereto. This is particularly noteworthy because cooling system performance can be varied by the installation of cooling inserts 150 with different fluid channel configurations (e.g., different pattern or channel sizes). In addition, manufacturers may experience fewer delays caused by mold assembly maintenance because one cooling insert 150 can be replaced with another to allow for continued use of the mold assembly 54 while the removed insert 150 undergoes inspection and/or repair. Such maintenance, in some instances, may include changing or modifying fluid channel patterns of the cooling insert 150 to improve cooling system performance. This may be particularly useful, when a new mold assembly is manufactured for a new product design. Generally speaking, mold assemblies for brand new articles are manufactured using design assumptions or best practices (or both), which may not provide sufficient article cooling. Often in such instances, the mold assemblies require modification (e.g., changes to fluid channels) so that they can properly manufacture the new article. Modifications to conventional mold assemblies, however, are limited because there are only a few ways to change fluid channel patterns that are manufactured using drilling techniques (e.g., increasing bore size or adding more drilled holes).

In some embodiments, the mold assembly 54 can also include an ejection system. In a general sense, the ejection system can be one or more components of the mold assembly 54 that are configured to displace the article from one of the molding surfaces so that the article can be removed from the assembly 54. In particular, the ejection system can include one or more knockout or ejector pins 100. Ejector pins 100 are configured to be inserted or otherwise positioned into the part cavity 88 to cause the newly manufactured article to be displaced from the mold surfaces 68 of the core 60. As shown in Figure 1, in one embodiment, the ejector pin 100 is configured to push or otherwise remove the newly manufactured article from the core 60. In some other embodiments, the ejector pins 100 can be installed within the mold cavity block 200 to remove the article therefrom. Positioned along an outer surface of the ejector pin 100 are O-rings 104 that seal or otherwise prevent cooling fluid from exiting the mold assembly 54 along the pin 100. The O-rings 104 can be manufactured from materials, such as nitrile rubber, plastic polymers, and fluorocarbon materials. In some other embodiments, the mold assembly may further include inserts and air poppets that are configured to pass through the core 60 and into the part cavity 88. Each of the inserts and air poppets can include one or more O-rings, such as O-rings 104, which seal the joints between them and the core 60.

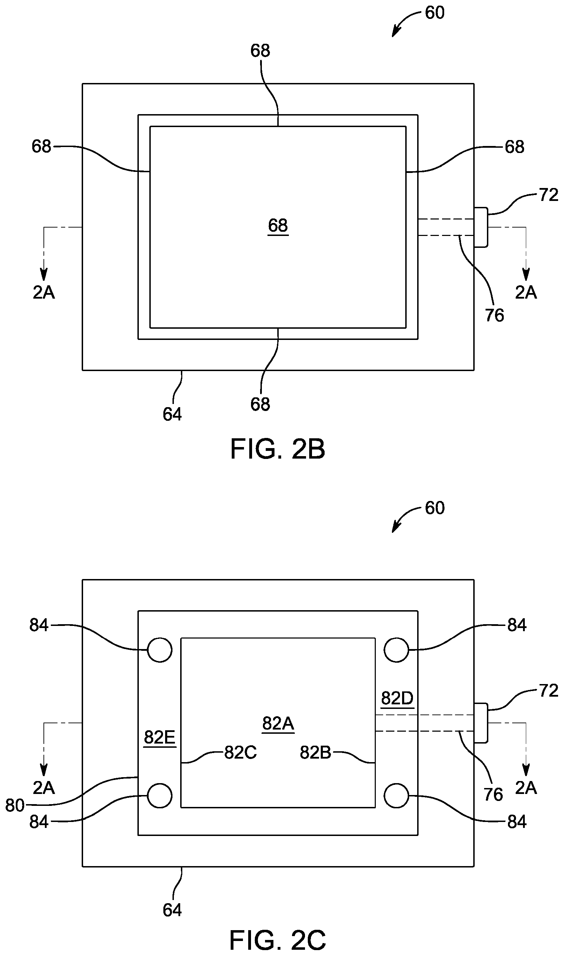

Figure 2A is cross-sectional view of a mold core block 60 of the mold assembly 54 of Figure 1, in accordance with an embodiment of the present disclosure. Figure 2B is a top view of the mold core block 60 shown in Figure 1. Figure 2C is a bottom view of the mold core block 60 shown in Figure 1. As previously described, together the core 60 and the mold cavity block 200 define the part cavity 88 in which to manufacture an article (e.g., a plastic part). In an example embodiment, the core 60 includes a body 64, a mold surface 68, a fluid inlet connection 72, a fluid supply channel 76, a cavity 80, and threaded holes 84. The body 64 includes the molding surface 68 and other components attached thereto (e.g., fluid inlet connection 72). In addition, the body 64 is configured to interface with the mold cavity block 200 so that the two components can be assembled together to form a seal off within the article, as will be described further herein. The body 64, in this embodiment, is configured to be installed within the mold cavity block 200, as previously shown in Figure 1. In other embodiments, however, the body 64 can be configured to receive the mold cavity block 200 so that the block 200 is installed in the core 60. The body 64, in some embodiments, can be manufactured from materials, such as carbon steel or stainless steel. In other embodiments, the body 64 can be made of other materials, for example aluminum, titanium, and carbon steel, so long as those materials have the requisite mechanical properties to withstand the forces applied by the injected material. In addition, the body 64 can be manufactured from materials that have heat transfer characteristics sufficient to transfer thermal energy away from the newly manufactured article and thereby cooling it. As can be seen, the body 64 is in a shape of a square. In some other embodiments, the body 64 can configured as a cylinder, rectangle, or polygon. No matter its shape, the body 64 can include a molding surface 68 on which to create a new article.

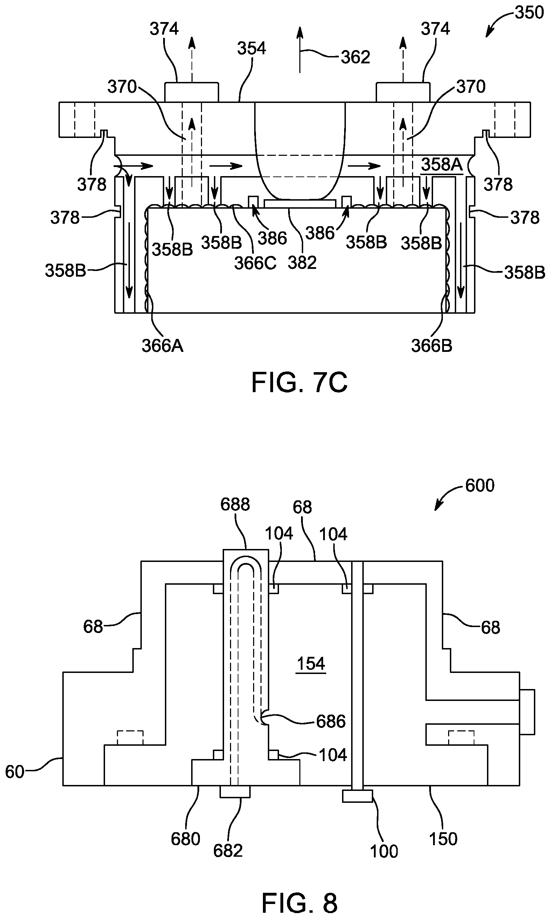

The core 60 includes mold surfaces 68 to manufacture an article, for example a plastic part. In a general sense, the mold surfaces 68 can define internal and external surfaces (or both) for a portion (e.g., one half) of the article to be manufactured. Another portion of the article is to be defined by a mold surface 208 of the mold cavity block 200, as will be described further herein. As the part cavity fills with material, the material is formed into a general shape of the article based on the contours, elevations, and features of the mold surface 68. In this example embodiment, the mold surfaces 68 are machined to a precise tolerance, for example, plus or minus 0.0002 of an inch using several techniques (e.g., welding, drilling, milling, and electro discharge machining (EDM)), either alone or in combination. The article being manufactured by the mold assembly 54 is detailed on the mold surface 68. In some embodiments, the mold surfaces 68 can include other features, such as locks, holes, and slide faces, which are used to manipulate the mold assembly 54. For instance, one of the mold surfaces 68 can further include a hole in which a second insert, such as cooling insert 680 of Figure 8 described further herein, passes through or is otherwise received therein to manufacture the article.

The core 60 further includes a fluid inlet connection 72 and a fluid supply channel 76. Together the fluid inlet connection 72 and fluid supply channel 76 direct cooling fluids (e.g., water) to the insert 150. As can be seen, the fluid inlet connection 72 can be located on one side of the core 60. In some embodiments, there may be more than one fluid inlet connection 72 depending on the cooling demands for a given application. In one example, the fluid inlet connection 72 is a fitting (e.g., a plumbing fitting) that is threaded into the body 64 and is configured to receive a conduit (e.g., a hose) associated with a cooling system. The cooling system can be a combination of pumps, tanks, valves and other plumbing fixtures configured to supply cooling fluid to the mold assembly. In some applications, the cooling system may include temperature gauges or sensors to monitor the temperature of the cooling fluid or mold assembly (or both). In some embodiments, the connection 72 is a quick-disconnect type fitting. In communication with the fluid inlet connection 72 is the fluid supply channel 76. The fluid supply channel 76 receives cooling fluid from a source (e.g., a pump) via the connection 72. In an example embodiment, the fluid supply channel 76 is a bore machined (e.g., by drilling) within the body 64 to form a passageway or conduit. As can be seen in Fig. 2A, in this one example the channel 76 passes from the outside of the body 64 to an internal cavity 80. In some embodiments, the fluid supply channel 76 may include one or more other bores to supply cooling fluid to different locations or components (or both) of the mold assembly 54. No matter its configuration, the fluid supply channel 76 directs cooling fluid to the cooling insert 150.

The core 60 also includes an internal cavity 80 (hereinafter referred to as cavity 80), such as a pocket or void, to receive the cooling insert 150. In an example embodiment, the cavity 80 includes internal surfaces 82A, 82B, and 82C (collectively 82) that interface with the cooling insert 150 to define at least one conduit for directing cooling fluid, as will be described further herein. Note that during manufacture of the core 60, internal surfaces 82 can be initially machined so that they include additional material. The additional material enables the core 60 to be heat treated to modify its mechanical properties without adversely affecting its final dimensions. During the heat treatment process one or more surfaces of the core 60 can become distorted or otherwise misshapen due to the core material expanding in response to experiencing high-temperature thermal energy from the heat treatment process. The additional material allows the distorted material to be removed without affecting the final size/dimensions of the core 60. In more detail, during the final machining of the core 60, the internal surface 82A is machined so that it as close to the molding surface 68 as possible. In one embodiment, the internal surfaces 82A-C can be located approximately 1/8 inches (in) to 3/16 in from the molding surfaces 68. The internal surfaces 82A-C can be located at other distances depending on the size of the raw material used to manufacture the core 60. For instance, the initial distance between the internal surfaces 82A-C and molding surfaces 68 can be greater than 3/16 of an inch to allow for additional material to compensate for the effects of the heat treatment process, as described above. This is especially true when the core 60 is manufactured from steel since steel may expand or otherwise distort when exposed to high temperatures. In addition, the tolerance for internal surfaces 82A-E, in some embodiments, can be +0.0002 in to -0.0000 in. Note that if not enough additional material is removed from the internal surfaces 82A-E then the cooling insert 150 may not fit within the internal cavity 80. In some instances, temporary supports (e.g., braces) can also be installed onto or otherwise machined into the body 64 within the cavity 80. These supports can minimize the movement of the internal surface 82A relative to the other internal surfaces 82B and 82C of the cavity 80 during the heat treatment process. These supports can be subsequently removed by way of machining to remove them from the body 64.

The internal surfaces 82 can also position the cooling insert 150 within the cavity 80. In this one embodiment, for instance, internal surfaces 82D and 82E can be machined to position the cooling insert 150 relative to the internal surface 82A. In more detail, internal surfaces 82D and 82E can be machined to remove material, which in turn allows the cooling insert 150 to be positioned closer to or in contact with the internal surface 82A. As a result, the cooling insert 150 can be installed within the cavity 80 such that it contacts both the internal surface 82A and internal surfaces 82D and 82E. In addition, the internal surfaces 82D and 82E can also include threaded holes 84 to receive fasteners, such as screws, bolts or studs, for attaching the cooling insert 150 to the core 60.

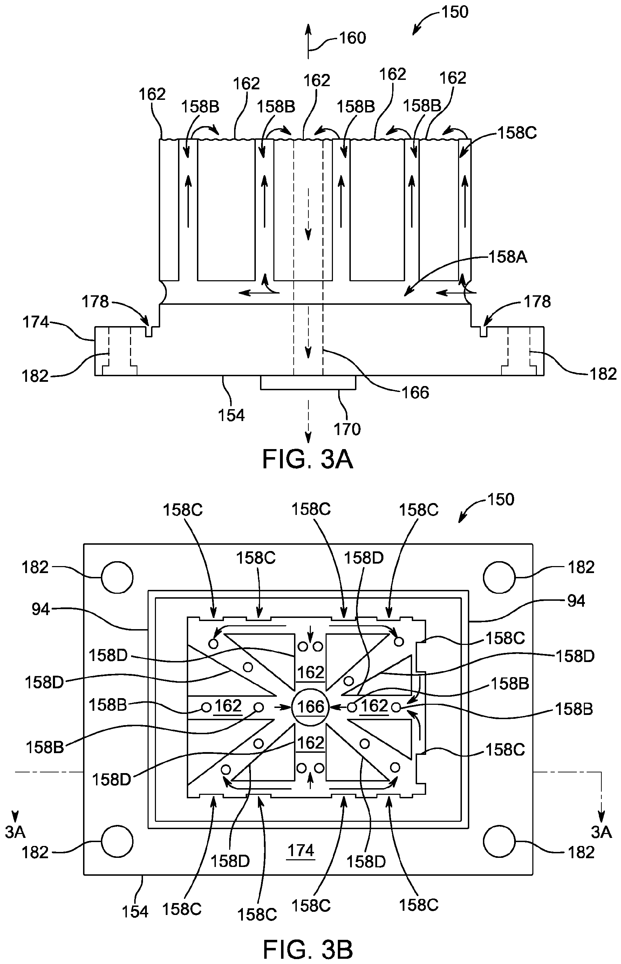

Figure 3A is cross-sectional view of a cooling insert 150 of the mold assembly 54 of Figure 1, in accordance with an embodiment of the present disclosure. Figure 3B is a top view of the cooling insert 150 shown in Figure 3A. The mold assembly 54 includes a cooling insert 150 that is installed or otherwise positioned within the core 60, as previously described herein. The cooling insert 150 receives cooling fluid (e.g., water) from a source (e.g., a water pump) via the core 60. The cooling insert 150 directs the flow of the cooling fluid against the internal surfaces 82A-C of the core 60 in a manner along a perimeter of the newly manufactured article (e.g., along a circumference of a round article). As it contacts the internal surfaces 82 of core 60, the cooling fluid absorbs thermal energy transferred from the article manufactured in the part cavity 88 to the mold core block 60, thereby cooling the article, as will be described further herein. In addition, when installed within the core 60 the cooling insert 150 is in contact with the internal surfaces 82A-C. As a result, the molding surfaces 68 of the core 60 are stiffened or otherwise supported to withstand the pressure applied to it by the injected material. This is particularly of note, since the portion of the core 60 that includes the molding surfaces 68 can be relatively thin to improve the transfer of thermal energy from the manufactured article to the cooling fluid. In an example embodiment, the cooling insert 150 includes a body 154, fluid channels 158A, 158B, 158C, and 158D (collectively 158), control surfaces 162, a fluid return channel 166, a fluid outlet connection 170, a flange 174, and a gasket groove 178.

The cooling insert 150 includes a body 154 that houses or otherwise supports the other components of the insert 150. In an example embodiment, the body 154 is manufactured from a single piece of material, such as carbon steel, or aluminum, or from several pieces of material, for example as a weldment. In some embodiments, the body 154 can be made from the same material as the core 60. In other embodiments, the cooling insert 150 and core 60 can be manufactured from different materials (e.g., the core 60 can be steel and the body 154 can be aluminum) to reduce costs and/or improve thermal properties of the mold assembly 54. No matter its material, the body 154 includes a number of fluid channels 158 for cooling the newly manufactured article.

As shown in Figures 3A-B, the cooling insert 150 further includes fluid channels 158 for directing or otherwise moving cooling fluid to lower the temperature of the article within the part cavity 88 of the mold assembly 54. In a general sense note that the fluid channels 158 can differ between mold assemblies 54 so that cooling fluid is flowed to the more critical areas (e.g., gate drops, or more dense areas of molten material) of the assembly 54. Thus, each mold assembly 54 can be customized based knowledge of the cooling requirements for each article to be manufactured so that thermal energy is more effectively removed from the article. As a result, the mold assemblies 54 of the present disclosure can be cooled using low-pressure cooling fluid because the fluid channels 158 are located in a position to receive the greatest amount of thermal energy from the article. Thus, mold assembles 54 can be operated without causing cavitation of the assembly 54 produced by moving high-pressure cooling fluid through the mold assembly 54. As can be seen the fluid channels 158 may be located internally or externally on the cooling insert 150 (or both). For instance, portions of the fluid channel 158A can be located both internally (e.g., as a through hole extending across the width of the insert 150) and externally (e.g., as a milled surfaced of one or more external surfaces of the insert 158A). Note that the fluid channels 158 located internally to the cooling insert 150 (e.g., 158A and 158B) can be created without drilling blind holes that can cause the mold assembly to be made improperly, as previously described herein. The fluid channels 158 can be made using machining techniques, such as milling and drilling. In addition, the plating techniques, such as electroplating processes, can be used before or after final machining to maintain desired tolerances of fluid channels 158.

In more detail, the fluid channels 158A may receive the cooling fluid from the core 60 and distributed it internally to the other fluid channels 158B and 158C of the cooling insert 150. The cooling fluid can also be distributed along an exterior surface of the insert 150 within milled portions of fluid channels 158A. In an example embodiment, the portions of the fluid channel 158A located on the exterior surface of the insert 150 are machined as a side radius using a ball mill to avoid errors caused by drilling blind holes. In addition, the portion of the fluid channel 158A located internally to the insert 150 may be larger than other fluid channels 158B and 158C so that it can provide cooling fluid to each of fluid channels 158B and 158C for adequate cooling of the newly manufactured article. In an example embodiment, the internal portions of the fluid channel 158A can have a diameter of 0.5000 inches (in). The internal portions of the fluid channel 158A, in other embodiments, can have a diameter ranging from 0.1250 in to 0.3750 in. The portions of the fluid channel 158A milled into the exterior surface of the insert 150 can have a milled radius of 0.375 in. to 0.500 in. As can be seen, the cooling fluid enters the cooling insert 150 (as indicated by the solid-line arrows) at one end of the fluid channel 158A. Once present within the fluid channel 158A, the cooling fluid can flow internally to one or more other channels 158B or externally to channels 158C (or both) via, for example the milled portions of the fluid channel 158A, to lower the temperature of the article being manufactured. In some cases, the portion of the fluid channel 158A located internally may be manufactured so that it can receive a temperature diode at one end. A temperature diode is a device configured to measure and collect temperature data for the incoming cooling fluid. The collected data can be used to evaluate the performance of the cooling system for the mold assembly 54.

In communication with fluid channel 158A are fluid channels 158B that are positioned internally to the cooling insert 150. Fluid channels 158B direct or otherwise guide cooling fluid from the fluid channel 158A to one or more different locations of the internal surface 82A of the core 60 to receive thermal energy from the newly manufactured article. As can be seen in Figure 3A, the fluid channels 158B are substantially straight vertical channels that are parallel to an axis 160 (e.g., a vertical centerline of the insert). In some other embodiments, the fluid channels 158B may be manufactured at an angle, for example 20, 30, 45, 60, or 80 degrees, relative to the axis 160. In an example embodiment, the fluid channel 158B can have a diameter of 0.1250 inches (in). The fluid channel 158B, in other embodiments, can have a diameter ranging from 0.0930 in to 0.3750 in depending on a desired flow rate of the cooling fluid for a given application.

The fluid channel 158A is also in communication with fluid channels 158C that are located on one or more external surfaces of the cooling insert 150. In more detail, fluid channels 158C can be manufactured on the outside of the insert 150 by milling rather than drilling. Thus, fluid channels 158C can be easily manufactured with a high-level of precision because the channels are readily accessible. In addition, fluid channels 158C can have varying contours and geometries that are not possible with other channels made using drilling techniques. For instance, drilling techniques can only manufacture bores in a limited number of ways (e.g., through straight bores that are vertical, horizontal, or at an angle to a reference axis) because drills only produce bores normal to the surface to be machined. In contrast, fluid channels made using milling techniques are not so limited because the cutting tool for a mill can move parallel to a surface in which it cuts. The fluid channels 158C can therefore be non-linear channels that include any one of curved or angled features. Thus, the fluid channels 158C can be manufactured into a pattern (e.g., an outline) similar to the shape of the newly manufacture article, thereby causing the cooling fluid to receive more thermal energy from the article or particular portions thereof. In some examples, the cooling insert 150 directs or otherwise focuses the cooling fluid to the surface 82A of the core 60 rather than surfaces 82B-C. A channel in the form of an outline is one that encloses or otherwise defines an outer edge or shape of the article. When the fluid channels 158C are machined as an outline of the article, the channels 158C may be located along a perimeter of, and proximate to, the article. In some examples, the channels 158C are located adjacent to an outer edge of the article. The channels 158C, in some examples, can be machined so that the channels 158C form a complete outline of the article. In another example, the channels 158C may form a partial outline of the article (e.g., the channels are proximate to one side of the article). More thermal energy is removed from the article because cooling fluid is located where significant amounts of thermal energy from the article are present (e.g., near the molding surface). In addition, fluid channels 158C can be easily modified to adjust cooling system performance. For instance, to increase the transfer of thermal energy from the article to the cooling fluid, the fluid channels 158C can be modified by changing a width or depth (or both) for the channels 158C. In some embodiments, the fluid channels 158C can be a combination of linear and non-linear channel portions. As can be seen in Figure 3A, the fluid channel 158C can be a substantially vertical channel positioned on one side of the cooling insert 150. Along the top surface of the cooling insert 150, however, the fluid channels 158D can form one or more non-linear paths, as shown in Figure 3B.

Together fluid channels 158B and 158C transfer the cooling fluid from fluid channel 158A to a surface (e.g., a top surface, DCCS) of the cooling insert 150 on which it can absorb thermal energy from the newly manufactured article. In this one example, the top surface of the cooling insert 150 is in contact with and supports the surface 82A of the mold core block 60, as previously described herein. As can be seen, the cooling fluid can move vertically (as indicated by the solid arrows) to a top surface of the cooling insert 150. Once at the top, the cooling fluid can flow along one or more fluid channels 158D milled into the top surface of the cooling insert 150 (i.e., the DCCS) that forms a pattern thereon (e.g., a pattern in the shape of the newly manufactured article). As can be seen, the cooling fluid can enter the fluid channels 158D located on the top surface of the cooling insert 150 via either fluid channels 158B (e.g., internal fluid channels) or fluid channels 158C (e.g., external fluid channels). The fluid channels 158D, in some embodiments, can include control surfaces 162 to adjust the flow of cooling fluid therein. A control surface, in a general sense, is a surface that causes a change in flow of fluid as the fluid contacts it. In an example embodiment, the control surface 162 can be a surface (or a portion of a surface) of the fluid channel (e.g., fluid channels 158C or 158D) and configured to change the flow of cooling fluid within the channel (e.g., from laminar to turbulent flow). In some embodiments, the control surface 162 can be a bottom surface of the fluid channel. In yet other embodiments, the control surface 162 can one or more side surfaces of the fluid channel. Regardless of their position, the control surface 162 can include a plurality of dimples, depressions, bumps, or steps located within some or all of the fluid channel that cause the flow of cooling fluid moving over the surface to become a turbulent flow. Turbulent flows of fluid promote or otherwise increase a fluid's ability to absorb thermal energy. Thus, the more turbulent the flow of cooling fluid the more thermal energy that is removed by the fluid. No matter its particular configuration, the fluid channels 158D allow the cooling fluid to move about to receive thermal energy from the newly manufactured article and towards a fluid return channel 166.

The body 154 of the cooling insert 150 further includes a fluid return channel 166 to guide or otherwise direct the flow of high-temperature cooling fluid out of the mold assembly 54. In general, note that the fluid return channel 166 can be any size or configuration sufficient to maintain a desired flow of cooling fluid through the mold assembly 54. As can be seen, in this one embodiment, the fluid return channel 166 is a substantially vertical cylindrical bore that extends from the top surface and through a bottom surface of the cooling insert 150. As shown in Figures 3A-B, the fluid return channel 166 can be located substantially near the center of the cooling insert 150 and parallel to axis 160. In other embodiments, the fluid return channel 166 can be located off-center and adjacent to one or more of the sides of the top surface of the body 154 of the cooling insert 150. The fluid return channel 166, in this one embodiment, can include a diameter of 0.500 in. In other embodiments, the fluid return channel can include a diameter ranging from 0.250 in to 0.750 in. In some other embodiments, the cooling insert 150 can include more than one fluid return channel 166 depending on the given application. The fluid return channel 166, in other embodiments, can be machined at an angle relative to the axis 160 (e.g., 30 or 45 degrees). In some cases, the fluid return channel 166 may be manufactured so that it can receive a temperature diode at one end to collect temperature measurements of the outgoing cooling fluid, as previously described herein. This temperature data along with other the incoming cooling fluid temperature data can be used to evaluate and adjust the performance of the cooling system for the mold assembly 54. Numerous other return fluid channel configurations will be apparent in light of the present disclosure.

The cooling insert 150 also includes fluid outlet connection 170 that is received within or otherwise positioned on one end of the fluid return channel 166. As can be seen, the fluid outlet connection 170 can be located on an external surface of the cooling insert 150 (e.g., a bottom surface). In other embodiments, however, the fluid outlet connect 170 can be located on one of the sides of the cooling insert 150. The insert 150, in some embodiments, may include more than one fluid outlet connections 170 depending on the flow rate of cooling fluid for a given application. In an example embodiment, the fluid outlet connection 170 is a fitting (e.g., a plumbing fitting) that is threaded into the body 154 and is configured to receive a conduit (e.g., a hose) associated with a cooling system (e.g., a water pump). In some embodiments, the connection 170 is a quick-disconnect type fitting. Numerous other fluid outlet connection configurations will be apparent in light of the present disclosure.

The cooling insert 150 further includes a flange 174 having a gasket groove 178 and threaded holes 182 therein. The flange 174 is configured to position the cooling insert 150 in relation to internal surface 82A of cavity 80 of the core 60. In other words, the thickness of the flange 174 determines the depth at which the cooling insert 150 is inserted into the core 60. In more detail, when the cooling insert 150 is installed into the internal cavity 80, the flange 174 is in contact with internal surfaces 82D and 82E, and thereby prevents further movement of the cooling insert 150 into the cavity 80. As a result, the distance of the top surface of the cooling insert 150 from the internal surface 82A of the core 60 is determined based on the contact of the flange 174 with internal surfaces 82D and 82E. To adjust this distance between core 60 and cooling insert 150, the flange 174 can be modified to increase or decrease the distance between the internal surface 82A and a top surface of the cooling insert 150. For example, the flange 174 can be machined to reduce its thickness. As a result, the distance between the top surface of the cooling insert 150 and internal surface 82A of the core 60 can be reduced because cooling insert 150 can move further into the cavity 80 before the flange 174 contacts the internal surfaces 82D and 82E. In this one example, note that the contact between inner surface 82A of the mold core block 60 and top of cooling insert 150 can be maintained evenly with the contour of molding surface 68 of the mold core block 60 during operation of the mold assembly 54. A failure to maintain contact between these components can result in damage to the molding surfaces of the mold core block 60 and/or the mold cavity block 200 caused by the high-pressure injection molding process to form the article.

The flange 174 includes a gasket groove 178 in which to receive a gasket 94. Generally speaking, the gasket groove 178 can be any size or shape sufficient to position the gasket 94 between the core 60 and cooling insert 150 and allow the insert 150 to be mounted flush onto the core 60. In this one embodiment, the gasket groove 178 is located on a surface normal to axis 160 (e.g., a horizontal surface) and adjacent to the external surfaces of the cooling insert 150. In some embodiments, the gasket groove 178 can be located on a surface parallel to axis 160 (e.g., external surface that includes fluid channels 158C). In yet other embodiments, there may be more than one gasket groove 178 to receive gaskets 94 for sealing the joint between the cooling insert 150 and the core 60. Numerous other sealing configurations will be apparent in light of the present disclosure.

The flange 174 further includes holes 182 to receive fasteners 96 to attach to the cooling insert 150 to the core 60. In a general sense, holes 182 are configured to receive a fastener. In some application, the holes 182 can be include internal threads configured to receive corresponding threads of fasteners 96. In other applications, the holes 182 may not include any threads to allow fastener to be passed through it. Thus, the cooling insert 150 can be easily disassembled or otherwise removed from the core 60 by removing fasteners 96. This feature is particularly noteworthy, since the mold assembly 54 may include two or more cooling inserts 150 that can be exchanged for one another. For instance, one of cooling insert 150 can undergo maintenance while the other is installed within mold assembly 54 to continue manufacturing articles. In this one embodiment, the flange 174 includes four holes 182 in a square bolt pattern that corresponds to the bolt pattern on the core 60. The holes 182 can have internal threads, such as 1/4-20, 1/2-13, M12-1.25. In other embodiments, the flange 174 may include more or less holes 182 depending on the given application. In any case, the holes 182 can be counter-bored so that the fasteners 96 (e.g., a bolt or nut) can be recessed within the flange 174. Recessing the fasteners 96 may enable the mold assembly 54 to be installed within a mold frame.

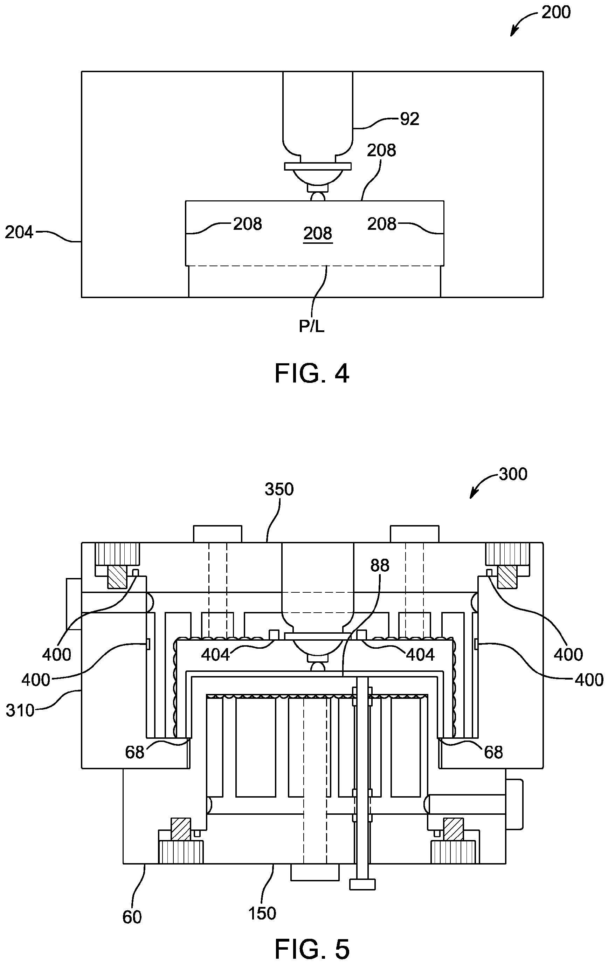

Figure 4 is cross-sectional view of a mold cavity block 200 of the mold assembly 54 of Figure 1, in accordance with an embodiment of the present disclosure. As previously described, together the core 60 and the mold cavity block 200 define a part cavity 88 in which to manufacture the article. In an example embodiment, the mold cavity block 200 includes a body 204 with a gate drop 92 disposed therein and a molding surface 208. The gate 92 has been previously described in relation to Figure 1. As can be seen, the body 204 can be configured to be received by the core 60. Thus, when positioned together, the core 60 and mold cavity block 200 can be received within a mold frame that maintains them in position relative to one another as the material is injected therebetween. In some other embodiments, the body 204 is configured to be installed within the core 60. The body 204, in some embodiments, can be manufactured from materials, such as carbon steel or stainless steel. In other embodiments, the body 204 can be made of other materials, for example aluminum, so long as those materials have the requisite mechanical properties to withstand the forces applied by the pressured material. In addition, the body 204 can be manufactured from materials that have heat transfer characteristics sufficient to conduct thermal energy away from the newly manufactured article and thereby cooling it. As can be seen, the body 204 is in a shape of a square. In some other embodiments, the body 204 can configured as a cylinder, rectangle, or polygon. The body 204, in some embodiments, can include a cavity to receive a cooling insert, as will be described further herein. No matter its shape, the body 204 includes a mold surface 208 to create a new plastic article.

The mold cavity block 200 includes a mold surface 208 to manufacture an article, for example a plastic part. In a general sense, the mold surface 208 can define internal and external surfaces (or both) for a portion (e.g., one half) of the article to be manufactured in the part cavity 88. The surfaces of one or more other portions of the article are defined by the mold surface 68 of the core 60, as previously described herein. In this example embodiment, the mold surface 208 is machined using a number of techniques (e.g., drilling, milling, and EDM) to as precise a tolerance as possible, for example, plus or minus 0.0002 of an inch. Similar to mold surface 68, the article being manufactured by the mold assembly 54 is also detailed on the mold surface 208. In some embodiments, the mold surface 208 can include other features, such as slide faces, holes, and gate drops, which are used to manipulate the mold assembly 54. As can be seen, in this one embodiment the mold surfaces 208 are flat surfaces defining a square shape recessed cavity. In other embodiments, the mold surface 208 can be a round, rectangular, or polygonal shape depending on the desired shape of the article to be manufactured.

### Alternate Example Mold Assembly Application

Figure 5 is a cross-sectional view of a mold assembly 300, in accordance with another embodiment of the present disclosure. When manufacturing some articles (e.g., articles with complex geometries), the cooling demands necessary to properly cool the article can be high. Thus, mold assemblies of present disclosure may include more than one cooling insert to transfer thermal energy from the article to a cooling fluid. In an example embodiment, mold assembly 300 includes a core 60 having a first cooling insert 150 and a mold cavity block 310 with a second cooling insert 350 installed or otherwise positioned therein. The mold assembly 300 is configured to manufacture an article in a pattern defined by the molding surfaces of the core 60 and mold cavity block 310 that form a part cavity 88. Together the core 60 and cavity block 310 transfer the forces from the pressurized material to cooling inserts 150 and 350. In response, the cooling inserts 150 and 350 transfer these forces to a mold frame. The core 60 and first cooling insert 150 have been previously described herein. To further reduce the time to cool the article, mold cavity block 310 includes a cooling insert 350. The cooling insert 350 is configured to supply cooling fluid to the mold cavity block 310 to allow the fluid to absorb thermal energy from the newly manufactured article. As shown, the cooling insert 350 is installed within the mold cavity block 310. The cooling insert 350, in this embodiment, also includes gaskets 400 to seal surfaces that form a joint between the mold cavity block 310 and cooling insert 350 to prevent cooling fluid from flowing out of the mold assembly 300. The gasket 400 can be manufactured from materials, such as nitrile rubber, plastic polymers, and polytetrafluoroethylene (Teflon). As shown, the cooling insert 350 can further include O-rings 404 that seal the surfaces that form a joint between the mold cavity block 310 and cooling insert 350 to prevent cooling fluid from entering the gate 92. O-rings 404 can be manufactured from materials, such as nitrile rubber, plastic polymers, and fluorocarbon materials.

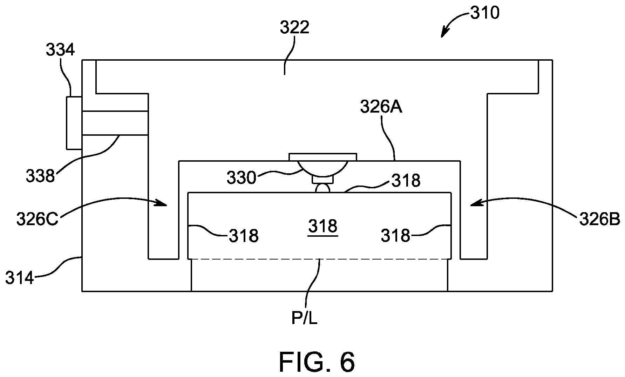

Figure 6 is cross-sectional view of the mold cavity block 310 of Figure 5, in accordance with an embodiment of the present disclosure. In an example embodiment, the mold cavity block 310 includes a body 314 with a molding surface 318. The mold surface 318 is similar to those previously described herein regarding other mold cavity block configurations. The body 314 can be configured to receive the core 60, as well as a second cooling insert 350. The mold cavity block 310 includes an internal cavity 322 (hereinafter referred to as cavity 322) to receive the second cooling insert 350. In an example embodiment, the cavity 322 includes internal surfaces 326A, 326B, and 326C (collectively 326) that interface with the cooling insert 350 to define at least one conduit for directing cooling fluid. Note that during manufacture of the mold cavity block 310, internal surfaces 326 can be initially machined so that they include additional material. The additional material enables the mold cavity block 310 to be heat treated to modify its mechanical properties without adversely affecting its final dimensions, as similarly described in relation to core 60. In this one embodiment, the internal surface 326A can be located approximately 1/8 inches (in) to 3/16 in from the mold surface 318. The internal surface 326A can be located at other distances depending on the size of the raw material used to manufacture the mold cavity block 310. For instance, the initial distance between the internal surface 326A and mold surface 318 can be greater than 3/16 of an inch to allow for additional material to compensate for the effects of the heat treatment process, as previously described. The mold cavity 310 can also receive a flange similar to the mold core block 60 as previously described and with the similar results. In addition, the mold cavity block 310 may also include a gate 330 which is similar to those previously described herein.

The mold cavity block 310 further includes a fluid inlet connection 334 and a fluid supply channel 338. Together the fluid inlet connection 334 and fluid supply channel 338 direct cooling fluids (e.g., water) to the cooling insert 350. As can be seen, the fluid inlet connection 334 can be located on one side of the mold cavity block 310. In some embodiments, there may be more than one fluid inlet connection 334 depending on the cooling demands for a given application. In an example embodiment, the fluid inlet connection 334 is a fitting (e.g., a plumbing fitting) that is threaded into the body 314 and is configured to receive a conduit (e.g., a hose) associated with a cooling system (e.g., a water pump). In some embodiments, the connection 334 is a quick-disconnect type fitting. In communication with the fluid inlet connection 334 is the fluid supply channel 338. The fluid supply channel 338 receives cooling fluid from a source (e.g., a pump) via the connection 334. In an example embodiment, the fluid supply channel 338 is a bore machined (e.g., drilled) within the body 314 to form a passageway or conduit. As can be seen, in this one example the channel 338 passes from the outside of the body 314 to an internal cavity 322. In some embodiments, the fluid supply channel 338 may include one or more other bores or passageways to supply cooling fluid to different locations or components (or both) of the mold assembly 300. No matter its configuration, the fluid supply channel 338 is to direct cooling fluid to the cooling insert 350.

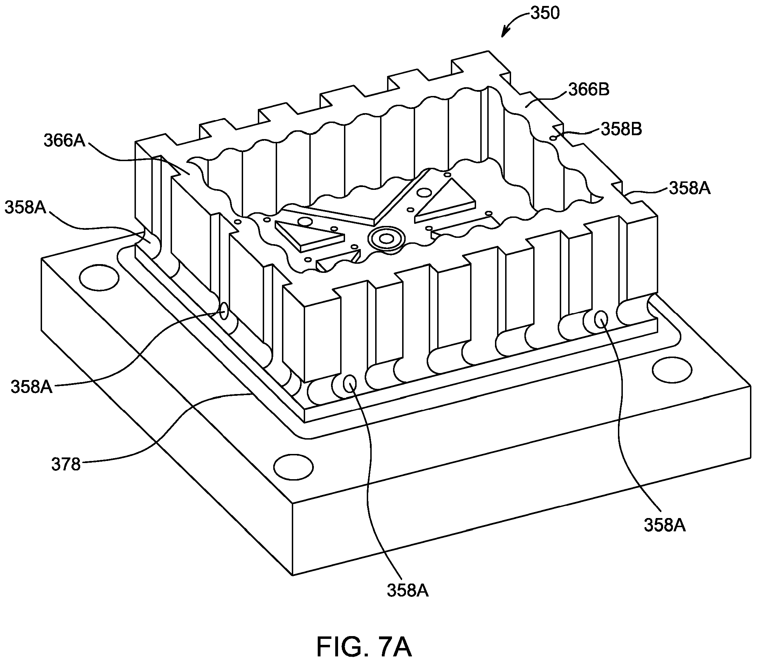

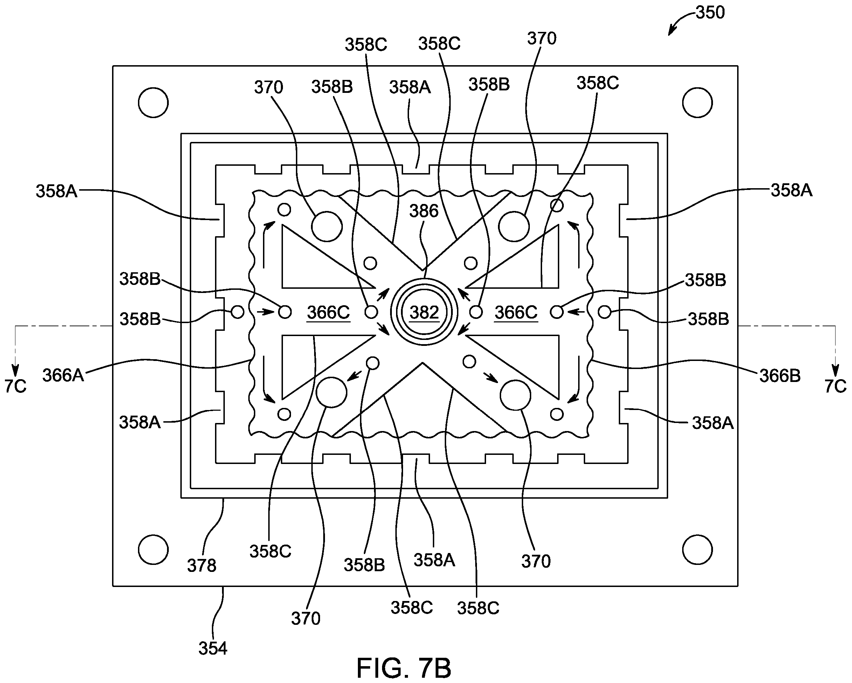

Figure 7A is a perspective view of the cooling insert 350 shown in Figure 5, in accordance with an embodiment of the present disclosure. Figure 7B is a top view of the cooling insert 350 shown in Figure 7A. Figure 7C is a cross-sectional view of the insert of the mold cavity block shown in Figure 7A. The mold assembly 300 includes a cooling insert 350 that is installed or otherwise positioned within the mold cavity block 310. The cooling insert 350 receives cooling fluid (e.g., water) from a source (e.g., a water pump) via the mold cavity block 310. The cooling insert 350 directs the flow of the cooling fluid against the internal surfaces 326A-C of the mold cavity block 310 in a manner along a perimeter of the newly manufactured article (e.g., along a circumference of a round-shaped article). As it contacts the internal surfaces 326A-C of mold cavity block 310, the cooling fluid absorbs thermal energy from the article manufactured in the part cavity 88 to lower the temperature of the article. In addition, when installed within the mold cavity block 310 the cooling insert 350 is in contact with the internal surfaces 326A-C. As a result, the mold surface 318 of the mold cavity block 310 is stiffened or otherwise supported to withstand the pressure applied to it by the injected material. This is particularly of note, since the portion of the mold cavity block 310 that includes the mold surface 318 can be relatively thin to improve the transfer of thermal energy from the manufactured article to the cooling fluid. In an example embodiment, the cooling insert 350 includes a body 354, fluid channels 358A, 358B, and 358C (collectively 358), control surfaces 366A, 366B, and 366C (collectively 366), a fluid return channel 370, fluid outlet connections 374, gasket grooves 378, and clearance gate 382, and an O-ring groove 386.

The cooling insert 350 includes a body 354 that houses or otherwise supports the other components of the insert 350. In an example embodiment, the body 354 is manufactured from materials, such as carbon steel, stainless steel or aluminum. In some embodiments, the body 354 of the cooling insert 350 can be made from the same material as the mold cavity block 310. In other embodiments, the cooling insert 350 and mold cavity block 310 can be manufactured from different materials (e.g., the block 310 can be steel and the cooling insert 350 can be aluminum) to reduce manufacturing costs and improve thermal cooling performance of the mold assembly 300. As can be seen, the body 354 can include gasket grooves 378 to receive gaskets 400. In addition, the body 354 can further include an opening 382 to receive gate 330. To prevent cooling fluid from flowing into the gate 330, the body 354 includes O-ring grooves 386 to receive O-rings 404.

The cooling insert 350 further includes fluid channels 358 for directing or otherwise moving cooling fluid to lower the temperature of the article within the part cavity 88. In a general sense note that the fluid channels 358 can vary between mold assemblies 300 so that cooling fluid is flowed to the more critical areas (e.g., hotspots) of the assembly 300. Thus, each mold assembly 300 can be customized based knowledge of the cooling requirements for each article to be manufactured so that thermal energy is more effectively removed from the article. As a result, the mold assemblies 300 of the present disclosure can be cooled using low-pressure cooling fluid because the fluid channels 358 are positioned to receive more thermal energy from the article (e.g., near the molding surfaces). Thus, mold assembles 300 can be utilized without causing cavitation of the assembly 54 induced by high-pressure cooling fluid flowing through the mold assembly 300. The fluid channels 358, in some embodiments, may be located internally or externally on the cooling insert 350 (or both). For instance, portions of the fluid channel 358A can be located both internally (e.g., as a through hole extending across the width of the insert 350) and externally (e.g., as a milled surfaced of one or more external surfaces of the insert 358A). Note that the fluid channels 358 located internally (e.g., 358B and internal portions of 358A) to the cooling insert 350 can be created without drilling blind holes that can cause the mold assembly 300 to be made improperly, as previously described herein. The fluid channels 358 can be made using machining techniques, such as welding, milling and drilling. In addition, the plating techniques, such as electroplating processes, can be used before or after final machining to maintain desired tolerances of fluid channels 358.

In more detail, the fluid channels 358A, in some examples, may receive the cooling fluid from the mold cavity block 310 and distributed it internally to the other fluid channels 358B of the cooling insert 350. As can be seen in Figure 7C, the cooling fluid enters the cooling insert 350 (as indicated by the solid-line arrows) at one end of the fluid channel 358A. The portion of the fluid channel 358A located internally to the insert 350 may be larger than other fluid channels 358B so that it can provide cooling fluid to each of fluid channels 358B for adequately cooling the newly manufacture article. In an example embodiment, the internal portions of the fluid channel 358A can have a diameter of 0.500 inches (in). The internal portions of the fluid channel 358A, in other embodiments, can have a diameter ranging from 0.250 in to 0.375 in. In some cases, the portion of the fluid channel 358A located internally may be manufactured so that it can receive a temperature diode at one end.

Once present within the fluid channel 358A, the cooling fluid can also flow externally within the milled portions of the fluid channel 358A to lower the temperature of the article being manufactured. In an example embodiment, the portions of the fluid channels 358A located on the exterior surface of the insert 350 are machined as a side radius using a ball mill to avoid errors caused by drilling blind holes. Thus, fluid channels can be manufactured with a high-level of precision because the channels can be easily measured and accessed during manufacture. In addition, the fluid channels can have varying contours and geometries that are not possible with other channels made using drilling techniques, as previously described herein. These fluid channels can therefore be non-linear channels in a pattern similar to the shape of the newly manufacture article, thereby causing the cooling fluid to receive more thermal energy at an even or otherwise uniform rate from the article. The portions of the fluid channel 358A milled into the exterior surface of the insert 350 can have a milled radius of 0.375 in. to 0.500 in. The fluid channels 358A, in some embodiments, can also be located on one or more external surfaces of the cooling insert 350.

In communication with fluid channel 358A are fluid channels 358B that are positioned internally to the cooling insert 350. Fluid channels 358B direct or otherwise guide cooling fluid from the fluid channel 358A to deliver cooling fluid to one or more different locations of the internal surface 326A of the mold cavity block 310 at which the cooling fluid receives thermal energy from the newly manufactured article. As can be seen, the fluid channels 358B are substantially straight vertical channels that are parallel to an axis 362 (e.g., a vertical centerline of the cooling inserts 350). In some other embodiments, the fluid channels 358B may be manufactured at an angle, for example 20, 30, 45, 60, or 80 degrees, relative to the axis 362. In an example embodiment, the fluid channel 358B can have a diameter of 0.375 inches (in). The fluid channel 358B, in other embodiments, can have a diameter ranging from 0.0930 in to 0.2500 in depending on a desired flow rate of the cooling fluid.

Fluid channels 358B transfer the cooling fluid from fluid channel 358A to a surface (e.g., bottom surface) of the cooling insert 350 at which it can absorb thermal energy from the newly manufactured article. As can be seen, upon entering the cooling insert 350, the cooling fluid flows along fluid channel 358A and is guided into one of the fluid channels 358B. In this case, the cooling fluid can move downwardly (as indicated by the solid arrows) to a bottom surface of the cooling insert 350. Once at the bottom, the cooling fluid can flow along one or more fluid channels 358C milled into the bottom surface of the cooling insert 350 that forms a pattern thereon (e.g., a pattern in the shape of the newly manufactured article). As can be seen, the cooling fluid can enter the fluid channels 358C located on the bottom surface of the cooling insert 350 via fluid channels 358B (e.g., internal fluid channels). The cooling insert 350, in some embodiments, can include one or more surfaces that include control surfaces 366 to adjust the flow of cooling fluid thereon. In an example embodiment, the control surface 366 can be a surface of the cooling insert 350 (e.g., a surface of a fluid channel or an external surface of the insert) that includes a plurality of dimples, depressions, bumps, or steps located within some or all of the surface to change the flow of cooling fluid moving over the surface (e.g., laminar to turbulent flow). In this one embodiment, the control surface 366C can be a surface of the fluid channel 358C. In some other embodiments, the control surface 366C can located one or two or all three surfaces of the fluid channel 358C. In some other embodiments, the control surfaces, such as surfaces 366A and 366B, can be located on an external surface of the cooling insert 350. No matter its configuration, the fluid channels 358 enable cooling fluid to receive thermal energy from the newly manufactured article and thereby cooling the article.

The cooling insert 350 further includes one or more fluid return channels 370 to allow high-temperature cooling fluid to exit the mold assembly 300. In general note that the fluid return channels 370 can be any size or configuration sufficient to maintain a desired flow of cooling fluid through the mold assembly 300. As can be seen, in this one embodiment, the fluid return channels 370 are substantially vertical cylindrical bores that extend from the top surface and through a bottom surface of the cooling insert 350. As shown, there can be more than one fluid return channels 370 that are positioned at different locations about the gate 330 within the cooling insert 350. The fluid return channels 370, in this one embodiment, can include a diameter of 0.500 in. In other embodiments, the fluid return channels 370 can have a diameter ranging from 0.250 in to 0.750 in. The fluid return channels 370, in other embodiments, can be machined at an angle relative to the axis 362 (e.g., 30 or 45 degrees). In some cases, the fluid return channels 370 may be manufactured so that they can receive a temperature diode at one end. The temperature diode can measure the temperature of the outgoing cooling fluid. Numerous other return fluid channel configurations will be apparent in light of the present disclosure.

The cooling insert 350 also includes fluid outlet connection 374 that is received or otherwise positioned in one end of the fluid return channels 370. As can be seen, the fluid outlet connection 374 can be located on an external surface of the cooling insert 350 (e.g., a top surface). In other embodiments, however, the fluid outlet connections 374 can be located on one of the sides of the cooling insert 350. In an example embodiment, the fluid outlet connections 374 are fittings (e.g., plumbing fittings) that are threaded into the cooling insert 350 and are configured to receive a conduit (e.g., a hose) associated with a cooling system (e.g., a water pump). In some embodiments, the connections 374 are a quick-disconnect type fitting. Numerous other fluid outlet connection configurations will be apparent in light of the present disclosure.

It should be noted that the alternative mold assembly 300 as described above in regard to FIGS. 5-7C is provided for exemplary purposes only, and components described therein can be configured to be interchanged with additional components as described herein in alternate embodiments. For example, the mold cavity block 310 shown in those figures can be designed such that, in certain implementations, the cavity 322 as defined therein is configured to interchangeably receive one of cooling insert 150 shown in Figs. 1-4 and the cooling insert 350 shown in Figs. 5-7 (and their associated internal components). Similarly, various components of the mold assembly 300 shown in Figs. 5-7 can be configured to be interchanged with the following alternative mold core block embodiment described in regard to FIG. 8.

### Alternate Example Mold Core Block Embodiment

Figure 8 is a cross-sectional view of a mold core block 600, in accordance with another embodiment of the present disclosure. In an example embodiment, the mold core block 600 includes a first cooling insert 150 and a second cooling insert 680. The second cooling insert 680 includes a molding surface 688, a fluid inlet connection 682, and a fluid supply channel 686. As can be seen, the second cooling insert 680 protrudes past the molding surface 68 of the mold core block 600. The molding surface 688 can be manufactured so as to mark the article with numbers (e.g., serial or model numbers) or material specifications. During article manufacturing, wear or damage to the molding surfaces of the second cooling insert 680 can occur from the abrasiveness of the molten material injected into the mold assembly. To maintain article dimensions and or surface finish the second cooling insert 680 can be replaced with another similarly configured insert. Insert 680, in some cases, can be made from an even harder material (e.g., titanium, carbon alloy steel) to resist wear. In addition, the insert 680 can be configured to interface with the mold cavity block 200 so that the mold core block 600 and mold cavity block 200 can be assembled together to form a seal off within the article (e.g., hole or slot in a plastic article). The insert 680 can be manufactured from similar or different materials as mold core block 600 and cooling insert 150 for desired effects. In some cases, the second cooling insert 680 can be a weldment and finished machined to desired dimensions. In some other embodiments, the second cooling insert 680 may not include fluid channel 686. In addition, O-rings or gaskets 104 can be used to seal the joints between mold core block 600 and cooling insert 150 to prevent cooling fluid from leaking out of the assembly.

It should be noted that the alternative mold core block 600 as described above in regard to FIG. 8 is provided for exemplary purposes only, and components described therein can be configured to be interchanged with additional components as described herein in alternate embodiments. For example, that mold core block 600 can be designed, in certain implementations, to interchangeably receive one or more of the cooling insert 150 shown in Figs. 1-4, the cooling insert 350 shown in Figs. 5-7, and the cooling insert 680 shown in Fig. 8 (and their associated internal components). Similarly, the mold core block 600 can be configured, in certain implementations, to be used in one or more of the mold assemblies 54 and 300 as described above with reference to Figs. 1-4 and 5-7 respectively.

### Methodology

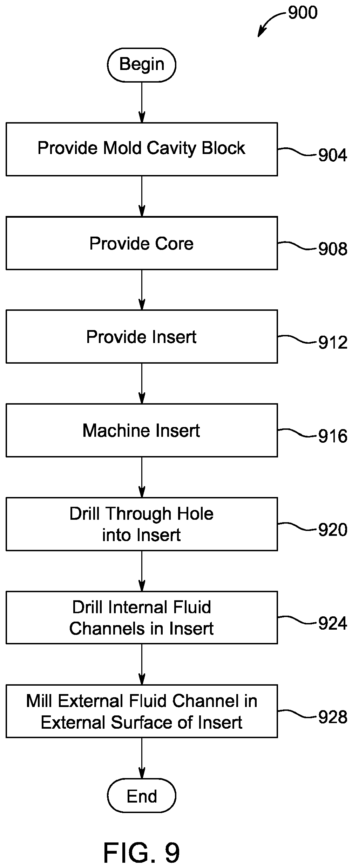

Figure 9 is a flowchart showing a method 900 for manufacturing a mold assembly, in accordance with an embodiment of the present disclosure. The method 900 includes providing 904 a mold cavity block. In one example, the mold cavity block can be manufactured from raw stock (e.g., a bar, square or round stock) that is cut to a predetermined size so that it can fit within the mold assembly fixture. The mold cavity block can be manufactured using a number of machining techniques, for example, welding drilling, tapping, and milling. The mold cavity block includes a molding surface on which the article is made. The article to be produced by the mold assembly is detailed on a molding surface that is located along a parting line. The mold cavity, in some examples, can be machined (e.g., pocketed) to create an internal cavity in which to receive a cooling insert. During the machining process, the mold cavity block may include temporary support braces within the internal cavity that prevent distortion of the block while it undergoes heat-treatment. The inner surface of the mold cavity block is to be machined so that the distance between the inner surface and the molding surface is between 1/8 in and 3/16 in. In addition, water channels and air lines can also be drilled into the mold cavity block so that water and air can be transferred to the internal cavity.

The method further includes providing 908 a core to be received within the mold cavity block, the core including a molding surface opposite an inner surface that defines a cavity. In one example, the core can be manufactured from raw stock that is cut to a predetermined size so that it can fit within the mold cavity block. The core can be manufactured using a number of machining techniques, for example, welding, drilling, tapping, and milling. The core includes a molding surface on which the article is made. The article to be produced by the mold assembly is detailed on a molding surface that is located along a parting line. Note that the molding surface of the mold core block includes an article pattern that is the mirror image of the pattern machined within the molding surface of the mold cavity block. The core, in some examples, can be machined (e.g., pocketed) to create an internal cavity in which to receive a cooling insert. During the machining process, the mold core block may include temporary support braces to prevent distortion of the core during heat-treatment. The inner surface of the core is to be machined so that the distance between the inner surface and the molding surface is between 1/8 in and 3/16 in. In addition, water channels and air lines can also be drilled into the core so that water and air can be transferred to the internal cavity. In addition, the core can further include O-ring and/or gasket grooves to receive seals for preventing cooling fluid from exiting the mold assembly.

The method 900 also includes providing 912 an insert configured to mate with the mold core block or the mold cavity block, depending on the application. In one example, the cooling insert is provided by machining a general shape of the insert from raw material (e.g., round, square, or bar stock). The machining of the insert may involve milling and/or drilling the raw stock to remove excess material. In some examples, the insert can be a weldment, forging or casting that has dimensions approximate to the final dimensions of the insert.

The method 900 further includes machining 916 an exterior surface on the insert so that the insert is received within the cavity and in contact with the inner surface of the mold core block to support the molding surface. In one example, machining the cooling insert involves milling and/or drilling the insert so that the insert can be installed within core. In particular, the insert, in some embodiments, can be machined with a flange to provide an adjustable length insert. In such instances, the thickness of the flange can determine the distance in which the cooling insert is inserted into the core. For example, machining the flange to reduce its thickness allows the cooling insert to be installed further into the core. On the other hand, adding material to the flange (e.g., using shims or by welding) to increase the thickness of the flange can limit the distance in which cooling insert is installed within the core. In other examples, the distance at which the cooling insert is inserted into the core is adjusted by machining a top surface of the cooling insert (e.g., the surface that contacts the inner surface of the cavity for the core). In another example, both the top surface and the flange can be machined to achieve a proper fit of the cooling insert within the core. Machining the cooling insert can also further include milling and drilling for O-ring/gasket grooves or fastener holes to allow the insert to be assembled with the core.

The method 900 further includes drilling 920 a through hole into the insert, such that when the insert is installed within the core the through hole is proximate to a fluid channel within the core. Note that the fluid channels of the insert can be manufactured without drilling blind holes. For instance, internal fluid channels (e.g., fluid channel 158A) are created by drilling a through hole from side of the insert through to an opposing side of the insert. In one example, the insert can be machined to include a single through hole. This through hole can be located, for example, along a midline of the insert such that it bisects the insert. In another example, the insert can be machined to include multiple through holes. These holes can be located parallel to one another in a vertical plane or a horizontal plane (or both). No matter their location, the through holes are to intersect one or more internal fluid channels within the insert.

The method 900 also includes drilling a plurality of internal fluid channels within the insert that intersect the through hole. In one example, the fluid channels (e.g., 158B) can be drilled using for example, a vertical mill or lathe. The internal fluid channels are drilled beginning at a top surface of the insert and continuing until intersecting a through hole (e.g., fluid channel 158A). The internal fluid channels can be machined such that they intersect one or multiple through holes within the insert. The fluid channels, in some examples, can be machined normal to the through hole (e.g., along a vertical plane). In some other examples, the fluid channels (e.g., 158A) can be at angle, such as 10, 20, 30, or 45 degrees, relative to an axis (e.g., axis 160 or 362). No matter their particular arrangement, the fluid channels can be precisely located within the cooling insert, because each end of the fluid channels is known and readily accessible.

The method 900 further includes milling an external fluid channel within one or more external surfaces of the insert that is constructed and arranged in an outline of an article to be produced by the mold assembly. These external fluid channels can be manufactured, for example, by milling the insert to create recessed fluid channels. The milled channels can be located along a perimeter of the article (e.g., in an outline of the part) within at least one external surface of the cooling insert, for example, a top surface. In some examples, the fluid channels can be milled within curved or angled or other non-linear external surfaces of the insert. The fluid channels are machined so that the channels are proximate to the inner surface and molding surface of the core in which thermal energy is received from the article. In addition, the fluid channels may be contoured or tapered such that the elevation of a bottom surface within the channels may vary along the channels length. In some examples, the fluid channels are milled so that the channels include one or more curves or radiuses to form a pattern that closely outlines the article. In particular, one or more fluid channels can be machined so that the channels are concentric about one another or a particular feature of the article. Numerous other fluid channel configurations will be apparent in light of the present disclosure.

In some examples, manufacturing mold assembly components (e.g., core, insert, mold cavity block) can be performed by multiple machining processes. For example, the components can be machined to approximate size (e.g., rough machining) and then undergo a heat treatment process to modify mechanical properties of the components. During the heat treatment process, the components are likely to be distorted from the previously machined dimensions due to the high temperatures (e.g., 350°F to 1350°F) associated with the process. Once heat treated, the components can be machined to final dimensions (e.g., within 0.0002 in) so that the components can be assembled together with one another. The final machining, in some examples, may include removing temporary braces that were machined during the rough machining of the components. Final machining may also include creating additional features, for example O-ring and gasket grooves or ejector pin and fastener holes.

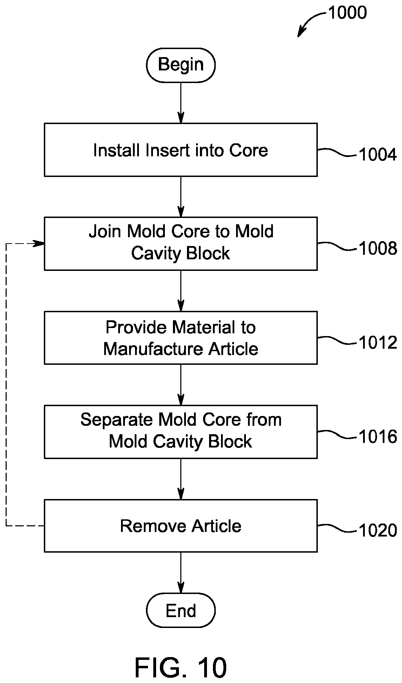

Figure 10 is a flowchart of a method 1000 for using a mold assembly to manufacture an article, in accordance with an embodiment of the present disclosure. The method 1000 includes installing 1004 an insert into a mold core block. In other example methods, the insert can be installed within the mold cavity block, depending on the given application. The insert, such as cooling insert 150, can be installed within the mold core block (e.g., core 60) by hand. The insert can be secured to the core with one or more fasteners (e.g., bolts and nuts) thereby removably attaching the insert to the core. The method 1000 further includes joining 1008 the core to a mold cavity block (e.g., block 200). The core can be removably joined to the mold cavity block using fasteners. In some examples, the core is joined to the mold cavity block using a mold assembly fixture that maintains the two components in position relative to one another. The method 1000 also includes providing material 1012 to manufacture the article. Material, such as molten plastic or rubber, can be provided to the mold assembly via conduits (e.g., gates or sprues) attached to a material source (e.g., a hot runner system). In some examples, two different materials injected during the mold cycle, such as is the case when the method is used in "two shot mold" process to manufacture the article, for example a "tooth brush body of plastic and rubber grip". Using the mold assemblies described in the present disclosure, different flow rates of cooling fluid can be applied to different portions of the article, such that two different molten materials solidify uniformly to produce a properly formed article. In yet other examples, the mold assembly is configured to inflate or expand portions of the article while the article is cooled within the mold assembly. The method 1000 further includes separating 1016 the core from the mold cavity block. With the manufactured article at a reduced temperature, the mold core block can be separated from the mold cavity block to expose the article. In one example, the mold core block can be separated from the mold cavity block by an injection molding machine injection press. In some examples, the mold core block is separated from the mold cavity block by disassembling a mold assembly fixture that holds the mold core block and mold cavity block together with one another. The method 1000 further includes removing 1020 the article from the mold assembly. With the core separated from the mold cavity block, the article is accessible and can be removed by hand or automatically by machine. In some examples, the mold core block (or mold cavity block) can be rotated to allow the article to fall from the mold assembly and onto a conveyer belt or within a container. In other examples, ejector pins can be inserted to displace the article from a molding surface for one of the core or mold cavity block so that the article can be easily removed from the mold assembly. In addition, some or all of the steps of method 1000, in some examples, can be repeated (as shown by the dash line) to manufacture another article. Numerous other methods of using the disclosed mold assemblies will be apparent in light of the present disclosure.

### Further Considerations

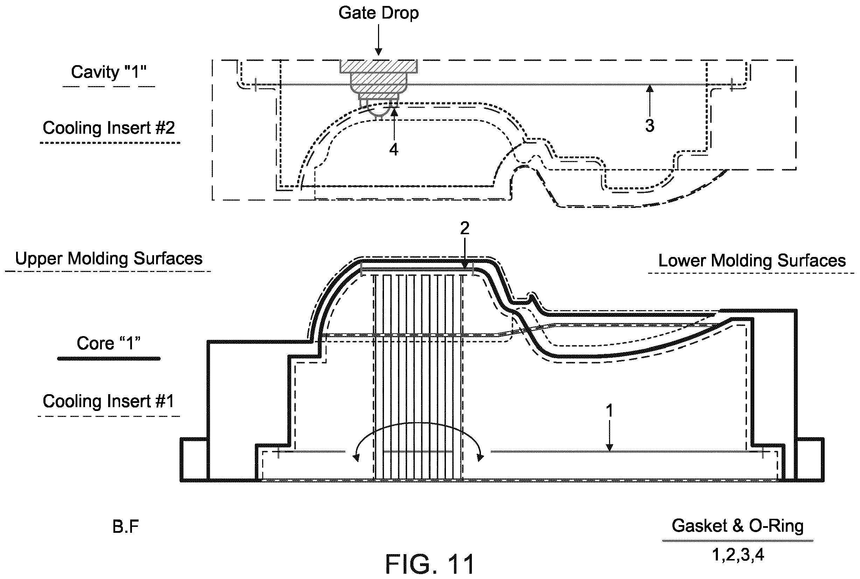

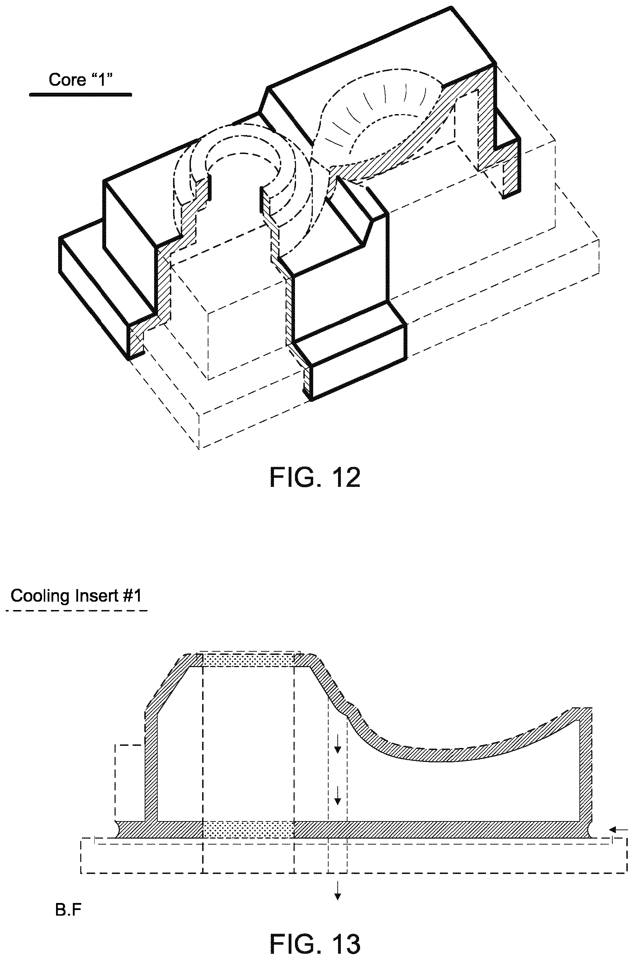

Numerous other mold assembly configurations will be apparent in light of the present disclosure. For example, in some embodiments of the present disclosure, the mold surfaces for the mold core block and mold cavity block can be contoured or otherwise having varying geometries to manufacture non-uniform shaped articles. To manufacture such articles, mold assemblies of the present disclosure can include inserts with a non-uniform geometry. As shown in Figures 11-13, the mold surfaces can include features, such as steps and radii, to form a single piece article (e.g., a plastic bottle cap) that can be closed upon itself. As can be seen, the cooling insert can have fluid channels that follow along with the varying geometries of the molding surface of the core. In addition, other devices (e.g., a part-forming insert) can be positioned into the cooling insert and through the mold core block to assist with forming the article within the part cavity. To prevent a loss of cooling fluid at the joint between the cooling insert and the device, an O-ring can be positioned around one end of the device.

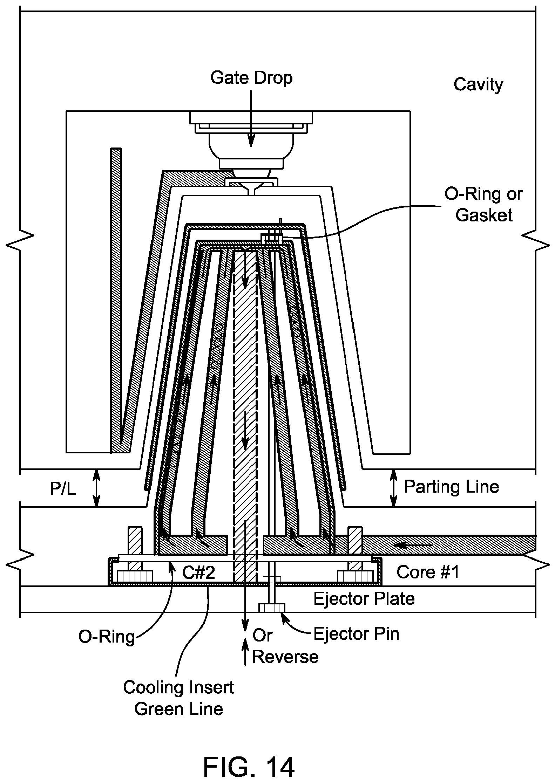

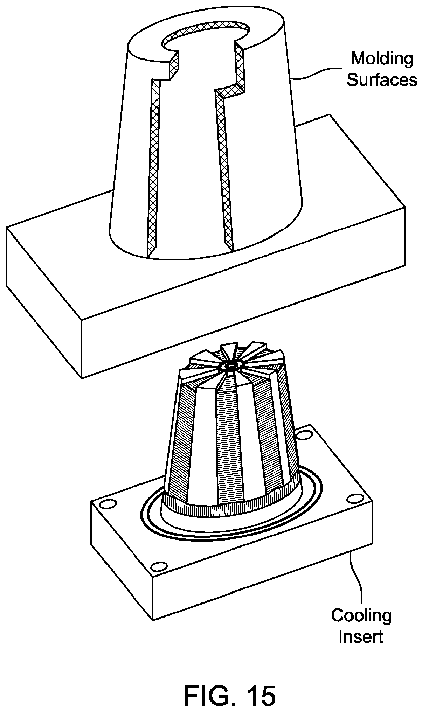

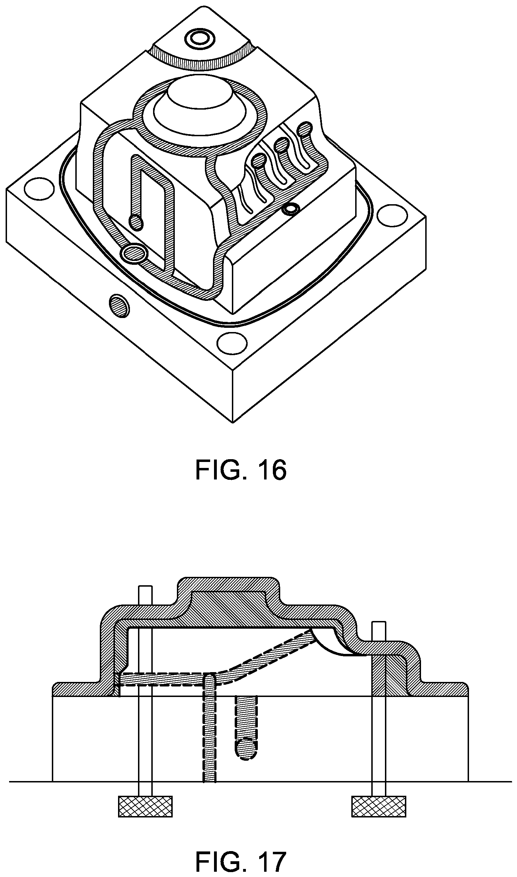

In some other embodiments, the mold assemblies of the present disclosure can be used to manufacture various articles, for example plastic bottles or cups. Thus, in some examples, the overall shape, as well as, fluid channel pattern can be defined by the article to be produced, for example a plastic cup. As shown in Figures 14 and 15, a base of the core can be square shaped so that it can be received within a mold frame. An upper portion of the core, however, can be configured as a tapered cylinder. Similarly, the cooling insert can also be configured as a tapered cylinder so it can be received within an internal cavity of the core. Together, the core and mold cavity block define a part cavity in the shape of a cup. The techniques and devices of the present disclosure allow such articles to be manufactured more quickly and with a lower scrap rate because the cooling fluid can be positioned closer to the molding surfaces and in a fashion, that more uniformly cools the newly manufacture article. For instance, as shown in Figures 16-17, the mold assemblies of present disclosure are not limited to particular fluid channel arrangements. Rather, the assemblies disclosed herein can include detailed and customizable fluid channel patterns that reduce the time in which to cool the article. As shown, the fluid channels can be non-linear channels that can be constructed and arranged in a manner to follow a perimeter of the article. In addition, the fluid channels are easily customizable using machining techniques, such as milling, so that more cooling fluid can be positioned near critical areas of the mold assembly so that the article is properly formed.

## Claims

1. A molding assembly (54) comprising:
a mold cavity block (200) including a first molding surface (208);
a mold core block (60) disposed in the mold cavity block, the mold core block including a second molding surface (68) and an inner surface (82) opposite the second molding surface, the inner surface defining an internal cavity (80) within the mold core block, the second molding surface and the first molding surface defining a part cavity (88), wherein the mold core block does not include one or more fluid channels recessed within the inner surface; and
an insert (150) disposed within the internal cavity of the mold core block and in contact with the inner surface, the insert including at least one fluid channel (158) recessed within one or more external surfaces of the insert, wherein fluid within the at least one fluid channel is to contact the inner surface to transfer thermal energy to the fluid from an article located within the part cavity via the second molding surface and the inner surface, the insert comprising a flange (174) configured to adjustably position the insert in relation to the inner surface.

2. The mold assembly of claim 1 further comprising at least one ejector pin (100) that is positioned within the insert and configured to extend through the mold core block and into the part cavity, wherein an O-ring (104) is installed about one end of the ejector pin to prevent fluid from flowing into the part cavity.

3. The mold assembly of any preceding claim, wherein the at least one fluid channel includes at least one control surface (162) to adjust a rate of cooling for the article within the part cavity.

4. The mold assembly of claim 3, wherein the at least one control surface is contoured to cause a turbulent flow of the fluid flowing through the at least one fluid channel.

5. The mold assembly of claim 3 or claim 4, wherein the at least one control surface is a bottom surface of the at least one fluid channel.

6. The mold assembly of any of claims 3-5, wherein the at least one control surface comprises at least one of a plurality of dimples, depressions, bumps, steps, and grooves.

7. The mold assembly of any preceding claim, wherein the at least one fluid channel is constructed and arranged in an outline of the article formed within the part cavity.

8. The mold assembly of any preceding claim, wherein the first molding surface and the second molding surface comprise a first material and the at least one fluid channel comprises a second material that is different from the first material.

9. The mold assembly of any preceding claim, wherein the mold cavity block further includes a gate (92) configured to receive a material flow and convey the material flow into the part cavity.

10. The mold assembly of any preceding claim, further comprising at least one of an O-ring or a gasket (94) positioned between the insert and the mold core block to prevent fluid from flowing out of the mold assembly.

11. The mold assembly of any preceding claim, further comprising a frame configured to receive the mold assembly and to maintain a position of the mold cavity block in relation to the mold core block as a material is injected into the part cavity to manufacture the article therein.

12. A method (900) of manufacturing a mold assembly (54), the method comprising:
providing (904) a mold cavity block (200);
providing (908) a mold core block (60) to be received within the mold cavity block, the mold core block including a molding surface (68) opposite an inner surface (82) that defines a cavity (80);
providing (912) an insert (150) configured to mate with the mold core block, the insert comprising a flange (174) configured to adjustably position the insert in relation to the inner surface;
machining (916) an exterior surface on the insert so that the insert is received within the cavity and in contact with the inner surface of the mold core block to support the molding surface;
drilling (920) a through hole into the insert, such that when the insert is installed within the mold core block the through hole is proximate to a fluid channel within the mold core block;
drilling (924) a plurality of internal fluid channels (158) within the insert that intersect the through hole;
milling (928) an external fluid channel (158) within one or more external surfaces of the insert that is constructed and arranged in an outline of an article to be produced by the mold assembly; and
machining the flange to adjust the distance between the insert and the inner surface.

13. The method of claim 12, further comprising machining at least one control surface (162) into the external fluid channel include to adjust a rate of cooling for the article produced by the mold assembly.

14. The method of claim 13, wherein the control surface is machined by milling at least one of a plurality of dimples, depressions, bumps, steps, and grooves within the external fluid channel.

15. The method of any of claims 12-14, wherein the external fluid channel is in a form of an outline of an article produced by the mold assembly.

16. A kit for a molding assembly (54), the kit comprising a combination of:
a mold cavity block (200) including a first molding surface (208);
a mold core block (60) configured to be received within the mold cavity block, the mold core block including a second molding surface (68) and an inner surface (82) opposite the second molding surface, the inner surface defining an internal cavity (80) within the mold core block, the second molding surface and the first molding surface defining a part cavity (88), wherein the mold core block does not include one or more fluid channels recessed within the inner surface; and
a first insert (150) configured to be received within the internal cavity of the mold core block and in contact with the inner surface, the first insert including at least one fluid channel (158) recessed within one or more external surfaces of the insert, wherein fluid within the at least one fluid channel is to contact the inner surface to transfer thermal energy to the fluid from an article located within the part cavity via the second molding surface and the inner surface, the insert comprising a flange (174) configured to adjustably position the insert in relation to the inner surface.

17. The kit of claim 16, further comprising a second insert configured to be received within the mold cavity block, the second insert including at least one fluid channel within one or more external surfaces of the second insert, wherein fluid is to contact a surface of the mold cavity block that is opposite the first molding surface to transfer thermal energy to the fluid from an article located within the part cavity via the first molding surface and the surface opposite the first molding surface.

18. The kit of claim 17, wherein the at least one fluid channel is reconfigurable by replacing the second insert with another insert.

## Patentansprüche

1. Formungsanordnung (54), umfassend:
einen Formhohlraumblock (200), der eine erste Formfläche (208) beinhaltet;
einen Formkernblock (60), der in dem Formhohlraumblock angeordnet ist, wobei der Formkernblock eine zweite Formfläche (68) und eine Innenfläche (82), die der zweiten Formfläche entgegengesetzt ist, beinhaltet, wobei die Innenfläche einen Innenhohlraum (80) innerhalb des Formkernblocks definiert, wobei die zweite Formfläche und die erste Formfläche einen Teilhohlraum (88) definieren, wobei der Formkernblock keinen oder keine mehreren Fluidkanäle beinhaltet, die in der Innenfläche ausgespart sind; und
einen Einsatz (150), der innerhalb des Innenhohlraums des Formkernblocks und in Kontakt mit der Innenfläche angeordnet ist, wobei der Einsatz mindestens einen Fluidkanal (158) beinhaltet, der in einer oder mehreren Außenflächen des Einsatzes ausgespart ist, wobei Fluid innerhalb des mindestens einen Fluidkanals die Innenfläche berühren soll, um Wärmeenergie von einem Gegenstand, der sich innerhalb des Teilhohlraums befindet, über die zweite Formfläche und die Innenfläche auf das Fluid zu übertragen, wobei der Einsatz einen Flansch (174) umfasst, der so konfiguriert ist, dass er den Einsatz in Bezug auf die Innenfläche einstellbar positioniert.

2. Formanordnung nach Anspruch 1, die ferner mindestens einen Auswerferstift (100) umfasst, der innerhalb des Einsatzes positioniert und so konfiguriert ist, dass er sich durch den Formkernblock und in den Teilhohlraum hinein erstreckt, wobei ein O-Ring (104) um ein Ende des Auswerferstifts herum installiert ist, um zu verhindern, dass Fluid in den Teilhohlraum strömt.

3. Formanordnung nach einem der vorhergehenden Ansprüche, wobei der mindestens eine Fluidkanal mindestens eine Steuerfläche (162) beinhaltet, um eine Kühlrate für den Gegenstand innerhalb des Teilhohlraums einzustellen.

4. Formanordnung nach Anspruch 3, wobei die mindestens eine Steuerfläche so konturiert ist, dass sie eine turbulente Strömung des Fluids bewirkt, das durch den mindestens einen Fluidkanal strömt.

5. Formanordnung nach Anspruch 3 oder Anspruch 4, wobei die mindestens eine Steuerfläche eine Bodenfläche des mindestens einen Fluidkanals ist.

6. Formanordnung nach einem der Ansprüche 3-5, wobei die mindestens eine Steuerfläche mindestens eine von einer Vielzahl von Noppen, Vertiefungen, Erhebungen, Stufen und Nuten umfasst.

7. Formanordnung nach einem der vorhergehenden Ansprüche, wobei der mindestens eine Fluidkanal in einem Umriss des innerhalb des Teilhohlraums gebildeten Gegenstands konstruiert und angeordnet ist.

8. Formanordnung nach einem der vorhergehenden Ansprüche, wobei die erste Formfläche und die zweite Formfläche ein erstes Material umfassen und der mindestens eine Fluidkanal ein zweites Material umfasst, das sich von dem ersten Material unterscheidet.

9. Formanordnung nach einem der vorhergehenden Ansprüche, wobei der Formhohlraumblock ferner eine Eingießöffnung (92) aufweist, die so konfiguriert ist, dass sie einen Materialfluss aufnimmt und den Materialfluss in den Teilhohlraum befördert.

10. Formanordnung nach einem der vorhergehenden Ansprüche, die ferner mindestens eines von einem O-Ring oder einer Dichtung (94), die zwischen dem Einsatz und dem Formkernblock positioniert ist, umfasst, um zu verhindern, dass Fluid aus der Formanordnung herausströmt.

11. Formanordnung nach einem der vorhergehenden Ansprüche, die ferner einen Rahmen umfasst, der so konfiguriert ist, dass er die Formanordnung aufnimmt und eine Position des Formhohlraumblocks in Bezug auf den Formkernblock aufrechterhält, während ein Material in den Teilhohlraum eingespritzt wird, um den Gegenstand darin herzustellen.

12. Verfahren (900) zum Herstellen einer Formanordnung (54), das Verfahren umfassend:
Bereitstellen (904) eines Formhohlraumblocks (200);
Bereitstellen (908) eines Formkernblocks (60), der innerhalb des Formhohlraumblocks aufgenommen wird, wobei der Formkernblock eine Formfläche (68) beinhaltet, die entgegengesetzt zu einer Innenfläche (82) ist, die einen Hohlraum (80) definiert;
Bereitstellen (912) eines Einsatzes (150), der so konfiguriert ist, dass er mit dem Formkernblock zusammenpasst, wobei der Einsatz einen Flansch (174) umfasst, der so konfiguriert ist, dass er den Einsatz in Bezug auf die Innenfläche einstellbar positioniert;
Bearbeiten (916) einer Außenfläche an dem Einsatz, sodass der Einsatz innerhalb des Hohlraums und in Kontakt mit der Innenfläche des Formkernblocks aufgenommen ist, um die Formfläche zu tragen;
Bohren (920) eines Durchgangslochs in den Einsatz derart, dass, wenn der Einsatz innerhalb des Formkernblocks installiert ist, das Durchgangsloch benachbart zu einem Fluidkanal innerhalb des Formkernblocks ist;
Bohren (924) einer Vielzahl von internen Fluidkanälen (158) innerhalb des Einsatzes, die das Durchgangsloch schneiden;
Fräsen (928) eines externen Fluidkanals (158) innerhalb einer oder mehrerer Außenflächen des Einsatzes, der in einem Umriss eines durch die Formanordnung herzustellenden Gegenstands konstruiert und angeordnet ist; und
Bearbeiten des Flansches, um den Abstand zwischen dem Einsatz und der Innenfläche einzustellen.

13. Verfahren nach Anspruch 12, das ferner ein Bearbeiten mindestens einer Steuerfläche (162) in die externe Fluidkanaleinfügung hinein umfasst, um eine Kühlrate für den durch die Formanordnung hergestellten Gegenstand einzustellen.

14. Verfahren nach Anspruch 13, wobei die Steuerfläche durch Fräsen mindestens einer von einer Vielzahl von Noppen, Vertiefungen, Erhebungen, Stufen und Nuten innerhalb des externen Fluidkanals bearbeitet wird.

15. Verfahren nach einem der Ansprüche 12-14, wobei der externe Fluidkanal in Form eines Umrisses eines durch die Formanordnung hergestellten Gegenstands vorliegt.

16. Bausatz für eine Formungsanordnung (54), wobei der Bausatz eine Kombination umfasst von:
einem Formhohlraumblock (200), der eine erste Formfläche (208) beinhaltet;
einem Formkernblock (60), der so konfiguriert ist, dass er innerhalb des Formhohlraumblocks aufgenommen ist, wobei der Formkernblock eine zweite Formfläche (68) und eine Innenfläche (82), die der zweiten Formfläche entgegengesetzt ist, beinhaltet, wobei die Innenfläche einen Innenhohlraum (80) innerhalb des Formkernblocks definiert, wobei die zweite Formfläche und die erste Formfläche einen Teilhohlraum (88) definieren, wobei der Formkernblock keinen oder keine mehreren Fluidkanäle beinhaltet, die in der Innenfläche ausgespart sind; und
einem ersten Einsatz (150), der so konfiguriert ist, dass er innerhalb des Innenhohlraums des Formkernblocks und in Kontakt mit der Innenfläche aufgenommen ist, wobei der erste Einsatz mindestens einen Fluidkanal (158) beinhaltet, der in einer oder mehreren Außenflächen des Einsatzes ausgespart ist, wobei Fluid innerhalb des mindestens einen Fluidkanals die Innenfläche berühren soll, um Wärmeenergie von einem Gegenstand, der sich innerhalb des Teilhohlraums befindet, über die zweite Formfläche und die Innenfläche auf das Fluid zu übertragen, wobei der Einsatz einen Flansch (174) umfasst, der so konfiguriert ist, dass er den Einsatz in Bezug auf die Innenfläche einstellbar positioniert.

17. Bausatz nach Anspruch 16, der ferner einen zweiten Einsatz umfasst, der so konfiguriert ist, dass er innerhalb des Formhohlraumblocks aufgenommen ist, wobei der zweite Einsatz mindestens einen Fluidkanal innerhalb einer oder mehrerer Außenflächen des zweiten Einsatzes beinhaltet, wobei Fluid eine Oberfläche des Formhohlraumblocks, die der ersten Formfläche entgegengesetzt ist, kontaktieren soll, um Wärmeenergie von einem Gegenstand, der sich in dem Teilhohlraum befindet, über die erste Formfläche und die Oberfläche, die der ersten Formfläche entgegengesetzt ist, zu übertragen.

18. Bausatz nach Anspruch 17, wobei der mindestens eine Fluidkanal durch Ersetzen des zweiten Einsatzes durch einen anderen Einsatz rekonfigurierbar ist.

## Revendications

1. Ensemble de moulage (54) comprenant :
un bloc à cavité de moule (200) comprenant une première surface de moulage (208) ;
un bloc à noyau de moule (60) disposé dans le bloc à cavité de moule, le bloc à noyau de moule comprenant une seconde surface de moulage (68) et une surface interne (82) opposée à la seconde surface de moulage, la surface interne définissant une cavité interne (80) à l'intérieur du bloc à noyau de moule, la seconde surface de moulage et la première surface de moulage définissant une cavité partielle (88), dans lequel le bloc à noyau de moule ne comprend pas un ou plusieurs canaux de fluide évidés dans la surface interne ; et
un insert (150) disposé à l'intérieur de la cavité interne du bloc à noyau de moule et en contact avec la surface interne, l'insert comprenant au moins un canal de fluide (158) évidé dans une ou plusieurs surfaces externes de l'insert, dans lequel le fluide à l'intérieur de l'au moins un canal de fluide doit être en contact avec la surface interne pour transférer l'énergie thermique au fluide depuis un article situé à l'intérieur de la cavité via la seconde surface de moulage et la surface interne, l'insert comprenant une bride (174) configurée pour positionner de manière ajustable l'insert par rapport à la surface interne.

2. Ensemble de moule selon la revendication 1, comprenant en outre l'au moins une broche d'éjection (100), qui est positionnée à l'intérieur de l'insert et configurée pour s'étendre à travers le bloc à noyau de moule et dans la cavité de pièce, dans lequel un joint torique (104) est installé autour d'une extrémité de la broche d'éjection pour empêcher le fluide de s'écouler dans la cavité de pièce.

3. Ensemble de moule selon l'une quelconque des revendications précédentes, dans lequel l'au moins un canal de fluide comprend au moins une surface de commande (162) pour ajuster une vitesse de refroidissement pour l'article à l'intérieur de la cavité de pièce.

4. Ensemble de moule selon la revendication 3, dans lequel l'au moins une surface de commande est profilée pour provoquer un écoulement turbulent du fluide s'écoulant à travers l'au moins un canal de fluide.

5. Ensemble de moule selon la revendication 3 ou la revendication 4, dans lequel l'au moins une surface de commande est une surface inférieure de l'au moins un canal de fluide.

6. Ensemble de moule selon l'une quelconque des revendications 3 à 5, dans lequel l'au moins une surface de commande comprend au moins l'une parmi une pluralité d'alvéoles, de dépressions, de bosses, de gradins et de rainures.

7. Ensemble de moule selon l'une quelconque des revendications précédentes, dans lequel l'au moins un canal de fluide est construit et agencé dans un contour de l'article formé à l'intérieur de la cavité de pièce.

8. Ensemble de moule selon l'une quelconque des revendications précédentes, dans lequel la première surface de moulage et la seconde surface de moulage se composent d'un premier matériau et l'au moins un canal de fluide se compose d'un second matériau qui est différent du premier matériau.

9. Ensemble de moule selon l'une quelconque des revendications précédentes, dans lequel le bloc à cavité de moule comprend en outre une porte (92) configurée pour recevoir un écoulement de matière et transporter l'écoulement de matière dans la cavité de pièce.

10. Ensemble de moule selon l'une quelconque des revendications précédentes, comprenant en outre au moins un élément parmi un joint torique ou un joint (94) positionné entre l'insert et le bloc à noyau de moule pour empêcher le fluide de s'écouler hors de l'ensemble de moule.

11. Ensemble de moule selon l'une quelconque des revendications précédentes, comprenant en outre un cadre configuré pour recevoir l'ensemble de moule et pour maintenir une position du bloc à cavité de moule par rapport au bloc à noyau de moule lorsqu'un matériau est injecté dans la cavité de pièce pour y fabriquer l'article.

12. Procédé (900) de fabrication d'un ensemble de moule (54), le procédé comprenant :
la fourniture (904) d'un bloc à cavité de moule (200) ;
la fourniture (908) d'un bloc à noyau de moule (60) destiné à être reçu à l'intérieur du bloc à cavité de moule, le bloc à noyau de moule comprenant une surface de moulage (68) opposée à une surface intérieure (82) qui définit une cavité (80) ;
la fourniture (912) d'un insert (150) configuré pour s'accoupler avec le bloc à noyau de moule, l'insert comprenant une bride (174) configurée pour positionner de manière ajustable l'insert par rapport à la surface interne ;
l'usinage (916) d'une surface extérieure sur l'insert de sorte que l'insert soit reçu à l'intérieur de la cavité et en contact avec la surface intérieure du bloc à noyau de moule pour supporter la surface de moulage ;
le perçage (920) d'un trou traversant dans l'insert, de telle sorte que lorsque l'insert est installé dans le bloc à noyau de moule, le trou traversant est à proximité d'un canal de fluide dans le bloc à noyau de moule ;
le perçage (924) d'une pluralité de canaux de fluide internes (158) à l'intérieur de l'insert, qui coupent le trou traversant ;
le fraisage (928) d'un canal de fluide externe (158) dans une ou plusieurs surfaces externes de l'insert, qui est construit et agencé dans un contour d'un article devant être produit par l'ensemble de moule ; et
l'usinage de la bride pour ajuster la distance entre l'insert et la surface interne.

13. Procédé selon la revendication 12, comprenant en outre l'usinage d'au moins une surface de commande (162) dans le canal de fluide externe pour ajuster une vitesse de refroidissement pour l'article produit par l'ensemble de moule.

14. Procédé selon la revendication 13, dans lequel la surface de commande est usinée par fraisage d'au moins une d'une pluralité d'alvéoles, de dépressions, de bosses, de gradins et de rainures à l'intérieur du canal de fluide externe.

15. Procédé selon l'une quelconque des revendications 12 à 14, dans lequel le canal de fluide externe se présente sous la forme d'un contour d'un article produit par l'ensemble de moule.

16. Kit pour un ensemble de moulage (54), le kit comprenant une combinaison de : un bloc à cavité de moule (200) comprenant une première surface de moulage (208) ;
un bloc à noyau de moule (60) configuré pour être reçu au sein du bloc à cavité de moule, le bloc à noyau de moule comprenant une seconde surface de moulage (68) et une surface interne (82) opposée à la seconde surface de moulage, la surface interne définissant une cavité interne (80) à l'intérieur du bloc à noyau de moule, la seconde surface de moulage et la première surface de moulage définissant une cavité partielle (88), dans lequel le bloc à noyau de moule ne comprend pas un ou plusieurs canaux de fluide évidés dans la surface interne ; et
un premier insert (150) configuré pour être reçu à l'intérieur de la cavité interne du bloc à noyau de moule et en contact avec la surface interne, le premier insert comprenant au moins un canal de fluide (158) évidé dans une ou plusieurs surfaces externes de l'insert, dans lequel le fluide à l'intérieur du au moins un canal de fluide doit être en contact avec la surface interne pour transférer l'énergie thermique au fluide depuis un article situé à l'intérieur de la cavité via la seconde surface de moulage et la surface interne, l'insert comprenant une bride (174) configurée pour positionner de manière ajustable l'insert par rapport à la surface interne.

17. Kit selon la revendication 16, comprenant en outre un second insert configuré pour être reçu à l'intérieur du bloc à cavité de moule, le second insert comprenant au moins un canal de fluide à l'intérieur d'une ou plusieurs surfaces externes du second insert, dans lequel le fluide doit entrer en contact avec une surface du bloc à cavité de moule, qui est opposée à la première surface de moulage pour transférer l'énergie thermique au fluide à partir d'un article situé à l'intérieur de la cavité de pièce par l'intermédiaire de la première surface de moulage et la surface opposée à la première surface de moulage.

18. Kit selon la revendication 17, dans lequel le au moins un canal de fluide est reconfigurable en remplaçant le second insert par un autre insert.
